# EUROPEAN PATENT SPECIFICATION

(11) **EP 3 978 749 B1**
(45) Date of publication and mention of the grant of the patent: **14.10.2026**
(21) Application number: 19931285.1
(22) Date of filing: 24.12.2019
(51) Int. Cl.: F03D 7/04

(54) **FEEDFORWARD CONTROL METHOD AND APPARATUS FOR WIND TURBINE GENERATOR SET, AND CONTROL SYSTEM**
VERFAHREN UND VORRICHTUNG ZUR VORWÄRTSGEKOPPELTEN STEUERUNG EINES WINDTURBINENGENERATORSATZES UND STEUERUNGSSYSTEM
PROCÉDÉ ET APPAREIL DE COMMANDE PRÉDICTIVE POUR ENSEMBLE GÉNÉRATEUR ÉOLIEN ET SYSTÈME DE COMMANDE

(30) Priority: 30.05.2019 CN 201910462953
(43) Date of publication of application: 06.04.2022
(73) Proprietor: Beijing Goldwind Science & Creation Windpower Equipment Co. Ltd., Beijing 100176 (CN)
(72) Inventor: BIAN, Fengjiao, Beijing 100176 (CN); LIU, Lei, Beijing 100176 (CN); JIANG, Mingyuan, Beijing 100176 (CN); YAO, Shigang, Beijing 100176 (CN)
(74) Representative: advotec.
(86) International application number: PCT/CN2019/127920
(87) International publication number: WO 2020/238182

(56) References cited:
- EP-A1- 3 273 055
- EP-A1- 3 298 521
- EP-A2- 1 770 278
- EP-B1- 1 770 278
- WO-A2-2010/061255
- CN-A- 101 368 541
- CN-A- 102 762 852
- CN-A- 104 364 522
- CN-A- 108 953 060
- US-A1- 2013 062 880
- FARAG WAEL ET AL: "A LiDAR-based pitch control strategy for ultra large wind turbines", 2017 NINETEENTH INTERNATIONAL MIDDLE EAST POWER SYSTEMS CONFERENCE (MEPCON), IEEE, 19 December 2017 (2017-12-19), pages 451 - 458, XP033325956, DOI: 10.1109/MEPCON.2017.8301219
- DAVID SCHLIPF ET AL: "Comparison of feedforward and model predictive control of wind turbines using LIDAR", DECISION AND CONTROL (CDC), 2012 IEEE 51ST ANNUAL CONFERENCE ON, IEEE, 10 December 2012 (2012-12-10), pages 3050 - 3055, XP032323824, ISBN: 978-1-4673-2065-8, DOI: 10.1109/CDC.2012.6426063

## Description

### FIELD

This application relates to the technical field of wind power in general, and in particular, to a feedforward control method, apparatus and control system for a wind turbine.

### BACKGROUND

With the development of technology, new remote sensing measurement devices have been gradually applied to the testing and control of a wind turbine. Due to the inevitable inductive effect in front of impeller, the actual wind speed reaching the impeller plane is not equal to the speed of the free incoming flow. The influence of the inductive effect and the speed attenuation rate reaching the impeller plane vary according to different wind speeds of the incoming flow. Under the influence of the inductive effect, when the incoming flow reaches to the impeller plane from different cross-sections, the wind speed does not change linearly, thus the wind speed of the incoming flow cannot be detected accurately.

Therefore, how to obtain accurate inflow wind information and strengthen the control of a large-scale wind turbine is one of key issues to be solved in the current wind power technology research and development process.

In EP 3 273 055 A1, a method to correct rotor induction for Light Detection and Ranging (LIDAR)-assisted wind turbine control is provided. An example method includes receiving wind speed data from a Light Detecting and Ranging (LIDAR) sensor. The example method includes receiving operating data indicative of wind turbine operation. The example method includes determining an apriori induction correction for wind turbine operating conditions with respect to the LIDAR wind speed data based on the operating data. The example method includes estimating a wind signal from the LIDAR sensor that is adjusted by the correction. The example method includes generating a control signal for a wind turbine based on the adjusted LIDAR estimated wind signal.

In EP 3 298 521 A1, a method for predicting arrival of a wind event at an aeromechanical structure is provided. The method includes sensing wind velocity in an atmospheric volume moving towards the aeromechanical structure to obtain a time series of spatially distributed wind velocity measurements, determining presence of the wind event from at least one of the distributed wind velocity measurements, and tracking the wind event based upon the time series of spatially distributed wind velocity measurements to estimate arrival time of the wind event at the aeromechanical structure.

### SUMMARY

A feedforward control method, apparatus and control system for a wind turbine are provided according to exemplary embodiments of this application, to overcome at least one of the aforementioned problems.

In one aspect, a feedforward control method for a wind turbine is provided according to claim 1. The feedforward control method includes: obtaining inflow wind information at multiple spatial point positions in front of the wind turbine through a remote sensing measurement device, where the multiple spatial point positions are distributed in multiple different cross-sections, and the multiple different cross-sections have different distances to the wind turbine; synthesizing the obtained inflow wind information into a target wind speed; predicting an incoming flow arrival time when inflow wind from a target point reaches to an impeller plane, based on the synthesized target wind speed; and performing a feedforward control on the wind turbine according to the predicted incoming flow arrival time.

In another aspect, a feedforward control device for a wind turbine is provided according to claim 23. The feedforward control device includes: an inflow wind information acquisition module configured to obtain inflow wind information at multiple spatial point positions in front of the wind turbine through a remote sensing measurement device, where the multiple spatial point positions are distributed in multiple different cross-sections, and the multiple different cross-sections have different distances to the wind turbine; a wind speed synthesis module configured to synthesize the obtained inflow wind information into a target wind speed; a time prediction module configured to predict an incoming flow arrival time when inflow wind from a target point reaches to an impeller plane, based on the synthesized target wind speed; and a feedforward control module configured to perform a feedforward control on the wind turbine according to the predicted incoming flow arrival time.

In another aspect, a controller of a wind turbine is provided. The controller includes: a processor, an input/output interface, and a memory for storing a computer program; where the computer program, when executed by the processor, implements the aforementioned feedforward control method for the wind turbine.

In another aspect, a control system for a wind turbine is provided. The control system includes: a remote sensing measurement device configured to detect inflow wind information at multiple spatial point positions in front of the wind turbine, where the multiple spatial point positions are distributed in multiple different cross-sections, and the multiple different cross-sections have different distances to the wind turbine; and a controller configured to obtain the inflow wind information at the multiple spatial point positions from the remote sensing measurement device, to realize the aforementioned feedforward control method for the wind turbine.

In another aspect, a computer-readable storage medium stored with a computer program is provided, and when the computer program is executed by a processor, the aforementioned feedforward control method for the wind turbine is implemented.

In the feedforward control method and device for a wind turbine, and the control system thereof according to embodiments of this application, the time of the inflow wind reaching the impeller plane can be accurately predicted based on an accurate wind speed, and the wind turbine is actively controlled, to reduce a load caused by the wind turbine suffering the uncertain inflow wind.

### BRIEF DESCRIPTION OF THE DRAWINGS

To make the objectives, technical solutions, and advantages of the embodiments of this application clearer, the technical solutions in the embodiments of this application will be described clearly and completely hereinafter in conjunction with the drawings in the embodiments of this application.
Figure 1 is a flow chart of a feedforward control method for a wind turbine according to an exemplary embodiment of this application;
Figure 2 is a schematic diagram illustrating a step of detecting inflow wind information at multiple spatial point positions through a remote sensing measurement device according to an exemplary embodiment of this application;
Figure 3 is a schematic diagram of two-dimensional spatial distribution of inflow wind information detected at multiple spatial point positions by a remote sensing measurement device according to an exemplary embodiment of this application;
Figure 4 is a schematic diagram of a wind speed curve according to an exemplary embodiment of this application;
Figure 5 is a flow chart of steps of performing a feedforward control on the wind turbine based on a predicted incoming flow arrival time according to an exemplary embodiment of this application;
Figure 6 is a flow chart of steps of performing a feedforward control on the wind turbine according to an exemplary embodiment of this application;
Figure 7 is a flow chart of steps of calculating a target wind shear factor according to an exemplary embodiment of this application;
Figure 8 is a flow chart of steps of determining a target wind direction according to an exemplary embodiment of this application;
Figure 9 is a block diagram of a feedforward control device for a wind turbine according to an exemplary embodiment of this application; and
Figure 10 is a block diagram of a control system of a wind turbine according to an exemplary embodiment of this application.

### DETAILED DESCRIPTION

Technical solutions in different illustrative embodiments will be described completely hereinafter in conjunction with accompanying drawings, and some illustrative embodiments are shown in the accompanying drawings.

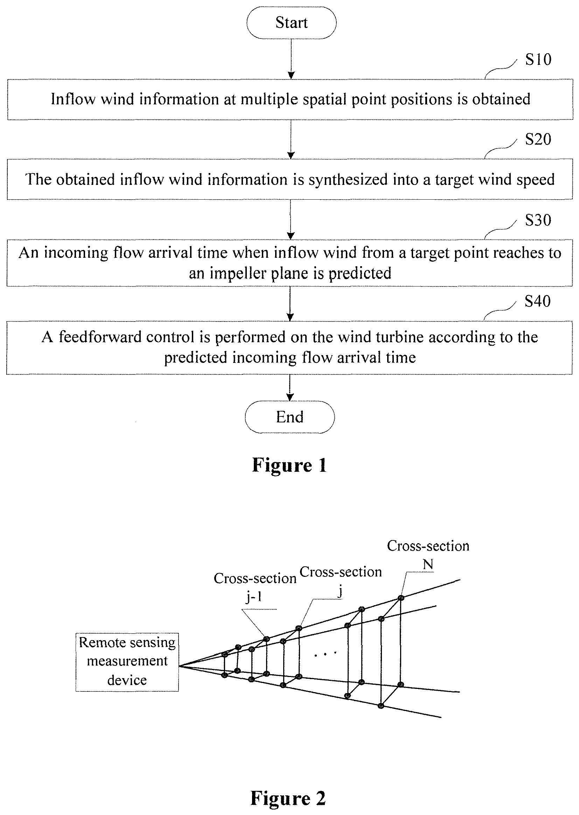

Figure 1 is a flow chart of a feedforward control method for a wind turbine according to an exemplary embodiment of this application.

Referring to Figure 1, in step S10, inflow wind information at multiple spatial point positions in front of the wind turbine is obtained through a remote sensing measurement device.

In one embodiment, the inflow wind information may include, but is not limited to, a wind speed of inflow wind at each of the multiple spatial point positions.

In one embodiment, a remote sensing measurement device may be provided on the top of a nacelle of the wind turbine, which is configured to detect inflow wind information at multiple spatial point positions. In this case, the inflow wind information at multiple spatial point positions in the aforementioned step S10 is obtained by the remote sensing measurement device.

The remote sensing measurement device may perform a non-contact and long-distance detection. As an example, the remote sensing measurement device may include, but is not limited to, a lidar. Alternatively, other devices, such as an ultrasonic wind measuring device, can also be used to detect the inflow wind information at the multiple spatial point positions.

The multiple spatial point positions are located in front of an impeller plane of the wind turbine (that is, a windward side). Taking the lidar as an example, a beam of the lidar is emitted toward the front of the impeller plane, to detect the inflow wind information at multiple spatial point positions in front of the impeller plane of the wind turbine.

Figure 2 is a schematic diagram illustrating a step of detecting inflow wind information at multiple spatial point positions through a remote sensing measurement device according to an exemplary embodiment of this application.

In the embodiment shown in Figure 2, the remote sensing measurement device is a lidar as an example. It is assumed that the lidar emits four laser beams. The lidar can obtain inflow wind information at the multiple spatial point positions on each of the four laser beams based on the emitted laser beams.

One cross-section is formed by spatial points having the same distance to the lidar, and thus the lidar has multiple cross-sections. That is, multiple spatial points are distributed on multiple different cross-sections, and the multiple different cross-sections have different distances to the wind turbine. Each multiple cross-section may be parallel to the impeller plane by adjusting an installation angle of the lidar. A distance between one cross-section and the lidar refers to a detection distance, and a position of the cross-section N refers to a farthest distance that the lidar can detect.

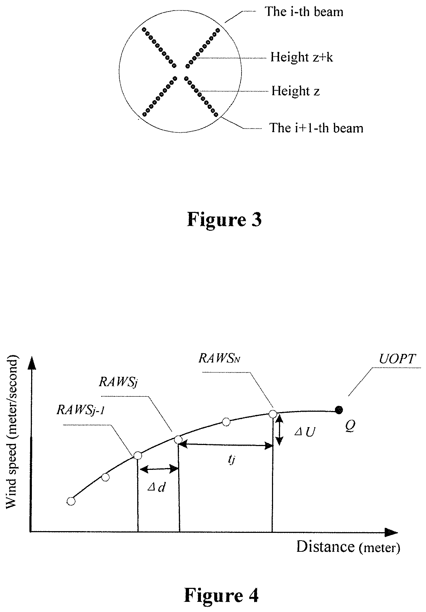

Figure 3 is a schematic diagram of two-dimensional spatial distribution of inflow wind information detected at multiple spatial point positions by a remote sensing measurement device according to an exemplary embodiment of this application.

As shown in Figure 3, for each beam emitted by the remote sensing measurement device, any spatial point positon on the beam includes not only a distance from the spatial point to the remote sensing measurement device (that is, a detection distance along a centerline of the beam), but also includes a height value of the spatial point (such as a height of z, or a height of z+k). The remote sensing measurement device can detect wind speeds of the inflow wind at all spatial points having different detection distances and different heights. The inflow wind information at each of the multiple spatial point positions detected by the remote sensing measurement device may include a wind speed of each of the multiple spatial point positions along a centerline direction of the beam and a wind speed of each of the multiple spatial point positions along a direction perpendicular to the centerline of the beam.

For example, the inflow wind information at any spatial point position may be expressed by a formula (1) in the following: ${RAW}_{i , j} = {U}_{i , j} {cosθ}_{i} + {V}_{i , j} {sinθ}_{i} {cosφ}_{i}$ (1)
where *RAW_{i,j}* represents a wind speed of inflow wind of the *i-th* beam of a remote sensing measurement device at the *j-th* cross-section, *U_{i,j}* represents a wind speed of the *i-th* beam at the *j-th* cross-section along a centerline direction of the *i-th* beam, and *V*_{*i*,*j*} represents a wind speed of the *i-th* beam at the *j-th* cross-section along a direction perpendicular to the centerline of the *i-th* beam, *θᵢ* represents a zenith angle of the *i-th* beam, and *φᵢ* represents an azimuth angle of the *i-th* beam with respect to a predetermined plane. The predetermined plane refers to a plane between an upper beam and a lower beam of the remote sensing measurement device. The zenith angle and the azimuth angle are both inherent parameters of the remote sensing measurement device.

In step S20, the obtained inflow wind information is synthesized into a target wind speed.

In front of the impeller of the wind turbine, there is an area where a wind speed is lower than a wind speed of an incoming flow due to obstruction of the impeller. This phenomenon is called inductive effect. The area where the wind speed is lowered due to the inductive effect is called an induced zone.

The existing wind measurement method by means of a remote sensing measurement device is susceptible to the inductive effect, resulting in inaccurate measurement of wind speeds. In an embodiment according to this application, a target wind speed is obtained by synthesizing a wind speed, therefore eliminating influence of the inductive effect on the wind speed, obtaining a more accurate inflow wind speed, and realizing precise control of the wind turbine based on the inflow wind speed. In other words, the synthesized target wind speed is an inflow wind speed that is not affected by the inductive effect.

It should be understood that various synthesis methods can be used to synthesize the inflow wind information at multiple spatial point positions into the target wind speed. The wind speed synthesis process described in the embodiments of this application is merely an example, and other wind speed synthesis algorithms may also be used to obtain the above-mentioned target wind speed, which is not limited by this application.

It can be seen from the above description that the remote sensing measurement device can emit multiple beams to detect the inflow wind information at different cross-sections. Based on this, in an embodiment of this application, it is proposed that a wind speed synthesis process is performed for each beam or for each cross-section. Various wind speed synthesis methods will be introduced separately hereinafter.

In a first embodiment, a wind speed synthesis process is performed for each cross-section of the remote sensing measurement device, to obtain the target wind speed.

In this case, for each cross-section, a cross-section average wind speed of the cross-section is determined according to the inflow wind information at each spatial point position of the cross-section, and the target wind speed is obtained based on cross-section average wind speeds of all cross-sections.

For example, a cross-section average wind speed of one cross-section may be an average value of inflow wind speeds at multiple spatial point positions of the cross-section. The cross-section average wind speed may also be calculated in other ways, which is not limited by this application. For example, a middle value of inflow wind speeds at multiple spatial point positions of the cross-section, or an average value of the maximum inflow wind speed and the minimum inflow wind speed at multiple spatial point positions of the cross-section may be selected as the cross-section average wind speed.

The method of obtaining the target wind speed based on the cross-section average wind speeds of all cross-sections will be exemplarily introduced hereinafter.

As an example, the target wind speed can be obtained according to cross-section average wind speeds of all cross-sections and inductive effect influence coefficients corresponding to respective cross-sections.

For each cross-section, a weight corresponding to the cross-section is set, and a ratio of a cross-section average wind speed to an inductive effect influence coefficient corresponding to the cross-section is calculated. A weighted sum of the ratios and the weight values corresponding to respective cross-sections is calculated and determined as the target wind speed.

Inductive effect influence coefficients corresponding to different cross-sections vary with the distances from spatial points to the impeller plane. As an example, the inductive effect influence coefficient corresponding to each cross-section may be determined in the following manner.

Specifically, a certain cross-section is selected from all cross-sections as a reference cross-section, and an inductive effect influence coefficient of the reference cross-section is set. The inductive effect influence coefficients of other reference cross-sections are obtained, by adjusting the inductive effect influence coefficient of the reference cross-section according to distances between the other cross-sections except the reference cross-section in all cross-sections and the reference cross-section.

The reference cross-section may be any one of all cross-sections. Specifically, the reference cross-section may be a cross-section at a position where the wind speed is least affected by the inductive effect among all the cross-sections.

For example, a position, that is least affected by the inductive effect, in front of the impeller plane of the wind turbine can be determined according to historical wind resource data of the wind turbine. A cross-section at the position (or a cross-section closest to the position) among all cross-sections is determined as the reference cross-section. The reference cross-section may also be selected in other ways, which is not limited by this application. For example, the reference cross-section may be selected from all cross-sections based on experience.

In an embodiment, the inductive effect influence coefficient corresponding to the reference cross-section may be set to 1, and the inductive effect influence coefficients corresponding to the other cross-sections may be obtained by adjusting the inductive effect influence coefficient of the reference cross-section according to distances between other cross-sections and the reference cross-section. For example, the inductive effect influence coefficients corresponding to other cross-sections gradually decrease from 1 as the distances between other cross-sections and the reference cross-section increase. As an example, an inductive effect influence coefficient corresponding to any other cross-section may be the reciprocal of a distance between the any other cross-section and the reference cross-section.

It should be understood that the above setting of the value of the inductive effect influence coefficient corresponding to the reference cross-section is merely an example, and those skilled in the art may set the inductive effect influence coefficient corresponding to the reference cross-section to other values according to actual requirements.

Alternatively, a machine learning algorithm may be utilized to determine an inductive effect influence coefficients corresponding to respective cross-sections based on historical wind resource data of the wind turbine.

For example, the historical wind resource data may include an actual inflow wind speed and a detected inflow wind speed at each cross-section. Data samples of the machine learning algorithm is constructed based on the historical wind resource data, and the inductive effect influence coefficients corresponding to respective cross-sections are obtained in the machine learning algorithm. It is understandable that the machine learning algorithm may include, but is not limited to, Extreme Learning Machine (ELM), and may also be other machine learning algorithms.

As an example, the target wind speed may also be obtained by eliminating time phase differences among average wind speeds of all cross-sections.

For example, an intermediate wind speed is obtained by synthesizing the cross-section average wind speeds of all cross-sections, to eliminate the time-phase differences among the cross-section average wind speeds of all cross-sections. The target wind speed is obtained according to the intermediate wind speed and a given inductive effect influence coefficient.

In an embodiment, the given inductive effect influence coefficient may be determined in the following manner.

For example, weights corresponding to respective cross-sections are set, and inductive effect influence coefficients corresponding to respective cross-sections are determined. A weighted sum of the inductive effect influence coefficients and the weights corresponding to respective cross-sections is calculated and determined as the given inductive effect influence coefficient.

The inductive effect influence coefficients corresponding to respective cross-sections may be obtained by adjusting the inductive effect influence coefficient of the reference cross-section as described above. It should be understood that the above-mentioned method of determining the given inductive effect influence coefficient in the embodiment of this application is merely an example, and the given inductive effect influence coefficient may also be determined in other ways, for example, the given inductive effect influence coefficient may be set based on experience.

As an example, the intermediate wind speed may be obtained in the following manner.

For each cross-section, an estimated wind speed when inflow wind reaches the designated cross-section from the cross-section is determined, according to a distance from the cross-section to the designated cross-section and a cross-section average wind speed of the cross-section. An average value of all estimated wind speeds is determined as the intermediate wind speed.

For example, the estimated wind speed when the inflow wind flows from any cross-section to a designated cross-section may be determined in the following way.

A flowing time required for the inflow wind to flow from a cross-section to the designated cross-section is calculated according to a distance from the cross-section to the designated cross-section and a cross-section average wind speed of the cross-section. A cross-section average wind speed of the designated cross-section determined after the flowing time is determined as the estimated wind speed when the inflow wind flows from the cross-section to the designated cross-section.

The above designated cross-section may be any one of all cross-sections. A ratio of the distance between the cross-section and the designated cross-section to the cross-section average wind speed of the cross-section may be determined as the flowing time required for the inflow wind to flow from the cross-section to the designated cross-section.

In the above method for synthesizing the intermediate wind speed by removing the time-phase differences of multiple cross-section average wind speeds, different inflow wind speeds at different cross-sections at any time and different flowing times required for the inflow wind to flow from different cross-sections to the impeller plane are considered. Assuming that the wind flow field is frozen, flowing time required for the inflow wind to flow within a distance between two adjacent cross-sections may be calculated based on the distance between the two adjacent cross-sections and the cross-section average wind speed.

In the embodiment of this application, the inflow wind information at each spatial point position is acquired in real time, and the cross-section average wind speed of each cross-section is calculated in real time. When the inflow wind flows to the designated cross-section after the flowing time, the inflow wind speed at each spatial point position is obtained according to a sampling frequency of the remote sensing measurement device. The cross-section average wind speed of the designated cross-section calculated at this time is determined as the estimated wind speed. The average value of the estimated wind speeds when the inflow wind flows reach the designated cross-section from each cross-section is determined as the intermediate wind speed.

In a second embodiment, a wind speed synthesis process is performed for each beam emitted by the lidar, to obtain the target wind speed.

In this case, for each beam emitted by the lidar, a beam synthesized wind speed of the beam is determined according to inflow wind information at multiple spatial point positions on the beam and inductive effect influence coefficients corresponding to the multiple spatial point positions. An average value of beam synthesized wind speeds of all beams is determined as the target wind speed.

In an embodiment, the beam synthesized wind speed can be determined, by setting weights for respective spatial point positions, calculating ratios of inflow wind information at spatial point positions on the beam to corresponding inductive effect influence coefficients, calculating a weighted sum of the ratios and the corresponding weights as the beam synthesized wind speed.

The inductive effect influence coefficient corresponding to each spatial point position may be determined according to the aforementioned method of determining the inductive effect influence coefficient corresponding to each cross-section.

In an exemplary embodiment of this application, the target wind speed may also be obtained based on a wind speed fitting curve, in addition to the wind speed synthesis method performed for each beam or each cross-section.

It should be understood that for other types of remote sensing measurement devices other than the lidar, such as an ultrasonic wind measurement device, the wind speed synthesis process may be performed based on a beam of ultrasonic waves emitted by the ultrasonic wind measurement device.

In a third embodiment, the target wind speed may be obtained, based on a wind speed fitting curve of inflow wind information at multiple spatial point positions.

In this case, the wind speed curve of the inflow wind flowing from a target point to the impeller plane is obtained according to the obtained inflow wind information at multiple spatial point positions. The obtained wind speed curve is integrated. A ratio of an integral area to a distance between the target point and the impeller plane is determined as the target wind speed.

Figure 4 is a schematic diagram of a wind speed curve according to an exemplary embodiment of this application.

It should be understood that the target point may be any point within a finite distance to the impeller plane. For example, the target point may be an inflow point within a finite distance to the impeller plane without the influence of inductive effects (for example, a point Q shown in Figure 4). The target wind speed may be defined as the inflow wind speed at the target point.

After the inflow wind information at multiple spatial point positions is obtained, various fitting, filtering, and smoothing methods may be utilized to obtain the wind speed curve of the inflow wind from the target point to the impeller plane (that is, a smooth wind speed curve). The target wind speed is determined based on the wind speed curve. The various fitting, filtering, and smoothing methods are common knowledge in the art, which will not be described in this application.

In an embodiment, different calculation methods may be selected based on the locations of the target points to determine the target wind speed.

In an exemplary embodiment of this application, Taylor's hypothesis is introduced. It is assumed that a wind flow domain in front of the impeller plane is frozen. If a location *x_{OPT}* of the target point Q (i.e., a distance between the target point Q and the impeller plane of the wind turbine) is greater than or equal to the farthest detection distance D(N) of the remote sensing measurement device, a following formula (2) may be used to calculate the target wind speed. ${U}_{OPT} = \frac{1}{n} {\sum }_{j = 1}^{n} {RAWS}_{j} \left({t}_{m}-\frac{{x}_{OPT} - {x}_{j}}{\overline{{u}_{j}}}\right)$ (2)

In the formula (2), *U_{OPT}* represents a target wind speed; *RAWSⱼ* represents a cross-section average wind speed at the *j-th* cross-section of a remote sensing measurement device; *x_{OPT}* represents a distance from a target point to an impeller plane; *xⱼ* represents a distance from the *j-th* cross-section to the impeller plane, where 1 ≤ *j* ≤ *n*; *n* represents the number of cross-sections for calculating the target wind speed; *tₘ* represents a flowing time required for inflow wind to flow from the target point to the impeller plane; and *u̅ⱼ̅* represents an average wind speed of the inflow wind flowing from the *j-th* cross-section to an adjacent *(j-1)-th* cross-section.

If the location of the target point Q is smaller than the farthest detection distance D(N) of the remote sensing measurement device, a following formula (3) may be used to calculate the target wind speed. ${U}_{OPT} = \frac{1}{n} {\sum }_{j = 1}^{p} {RAWS}_{j} \left({t}_{m}-\frac{{x}_{OPT} - {x}_{j}}{\overline{{u}_{j}}}\right) + \frac{1}{n} {\sum }_{j = p + 1}^{n} {RAWS}_{j} \left({t}_{m}-\frac{{x}_{j} - {x}_{OPT}}{\overline{{u}_{j}}}\right)$ (3)

In an exemplary embodiment of this application, the *p-th* cross-section in formula (3) refers to a cross-section, which is located between the target point and the impeller plane and has a distance closest to the target point among the multiple cross-sections. It is assumed that a cross-section closest to the remote sensing measurement device (that is, j=1) is the first cross-section.

The wind speed in the above formula (2) and formula (3) may be obtained by removing time-phase differences of cross-section average wind speeds of all cross-sections, and then performing an average calculation. In this way, the target wind speed that is not affected by the inductive effect can be obtained.

The average wind speed *u̅ⱼ̅* in the above formula may be obtained by the wind speed curve shown in Figure 4. For example, the wind speed curve from the *j-th* cross-section to the adjacent *(j-1)-th* cross-section is integrated, and a ratio of an integral area of the wind speed curve to a distance difference Δ*d* between the two cross-sections is determined as the average wind speed *u̅ⱼ̅*. In Figure 4, Δ*U* represents a difference between cross-section average wind speeds of the two cross-sections, and *tⱼ* represents a flowing time required for the inflow wind to flow from the *N-th* cross-section to the *j-th* cross-section.

In an exemplary embodiment of this application, the target wind speed that is not affected by the inductive effect is obtained by synthesizing the inflow wind information at multiple spatial point positions, according to influence rules of vertical wind shearing effect, horizontal wind shearing effect and inductive effect on wind flow field in front of the impeller. The target wind speed that is not affected by the inductive effect may be used for active control and evaluation of the wind turbine.

Referring to Figure 1, in step S30, an incoming flow arrival time when inflow wind from a target point reaches to an impeller plane is predicted based on the synthesized target wind speed.

In an embodiment of this application, Taylor's hypothesis is introduced in a prediction process of the incoming flow arrival time, which assuming that the wind flow domain in front of the impeller plane is frozen. The incoming flow arrival time is predicted according to a synthesized target wind speed under this premise.

Optionally, the incoming flow arrival time may be predicted in following four ways.

In the first way, the incoming flow arrival time is predicted based on the target wind speed and a distance from a position of the target point to the impeller plane.

For example, the incoming flow arrival time is determined based on a ratio of the distance between the position of the target point and the impeller plane to the target wind speed.

In the second way, the incoming flow arrival time is predicted based on the wind speed curve and the target wind speed.

In the case that the target wind speed is obtained based on the wind speed curve of the inflow wind information at multiple spatial point positions, the wind speed curve from the target point to the impeller plane is integrated, and a ratio of an integral area to the target wind speed is determined as the incoming flow arrival time required for the inflow wind to reach the impeller plane from the target point.

In the third way, the incoming flow arrival time required for the inflow wind to reach the impeller plane from the target point is predicted based on a corresponding relationship between the target wind speed and the incoming flow arrival time.

For example, a correspondence relationship between the target wind speed and a flowing time required for the inflow wind at the target point to reach the impeller plane is established in advance, by using a deep learning method based on historical wind resource data of the wind turbine. After the target wind speed is synthesized, a flowing time corresponding to the synthesized target wind speed may be searched according to the correspondence relationship established in advance. The searched flowing time is determined as the incoming flow arrival time. The target wind speed and the flowing time used to establish the correspondence relationship may be obtained by using the aforementioned method in the exemplary embodiment of this application.

In the fourth way, the incoming flow arrival time required for the inflow wind at the target point to reach the impeller plane is predicted by calculating the incoming flow arrival time in sections.

For example, the first flowing time required for the inflow wind to flow from a predetermined cross-section to a designated cross-section, and the second flowing time required for the inflow wind to flow from the designated cross-section to the impeller plane are calculated respectively. A sum of the first flowing time and the second flowing time is determined as the incoming flow arrival time required for the inflow wind at the target point to reach the impeller plane. The predetermined cross-section has a distance to the impeller plane greater than a distance from the designated cross-section to the impeller plane.

As an example, the incoming flow arrival time required for the inflow wind at the target point to reach the impeller plane may be predicted by the following formula (4). ${t}_{OPT} = {\sum }_{b = 1}^{c} {t}_{b} + {t}_{a}$ (4)

In the formula (4), *t_{OPT}* represents the incoming flow arrival time required for the inflow wind at the target point to reach the impeller plane, *t_{b}* represents the first flowing time required for the inflow wind to flow from the *b-th* predetermined cross-section to the designated cross-section *a, tₐ* represents the second flowing time required for the inflow wind to flow from the designated cross-section *a* to the impeller plane, and c represents the number of the predetermined cross-sections.

A ratio of a distance between the *b-th* cross-section and the designated cross-section *a* to a cross-section average wind speed of the *b-th* cross-section may be determined as the first flowing time *t_{b}.* Alternatively, the wind speed curve from the *b-th* cross-section to the designated cross-section *a* is integrated, and a ratio of the integral area to the cross-section average wind speed of the *b-th* cross-section is determined as the first flowing time *t_{b}.*

Correspondingly, a ratio of a distance between the designated cross-section *a* and the impeller plane to a cross-section average wind speed of the designated cross-section *a* may be determined as the second flowing time *tₐ.* Alternatively, the wind speed curve from the designated cross-section *a* to the impeller plane is integrated, and a ratio of the integral area to the cross-section average wind speed of the designated cross-section *a* is determined as the second flowing time *tₐ.*

If the location of the target point Q is smaller than or equal to the farthest detection distance D(N) of the remote sensing measurement device, the above formula (4) may be used to calculate the incoming flow arrival time. If the location of the target point Q is greater than the farthest detection distance D(N) of the remote sensing measurement device, the value of *t_{OPT}* in the above formula (4) includes the third flowing time *t_{d}* in addition to the aforementioned first flowing time *t_{b}* and second flowing time *tₐ.* The third flowing time *t_{d}* refers to a flowing time required for the inflow wind to flow from the target point to the farthest detection distance D(N). For example, the third flowing time *t_{d}* may be determined by a ratio of the distance between the target point and the farthest detection distance D(N) and a cross-section average wind speed of a cross-section at the farthest detection distance D(N).

It should be understood that the method of predicting the incoming flow arrival time based on the target wind speed described in the embodiment of this application is merely an example, and the incoming flow arrival time may also be predicted in other ways.

In step S40, a feedforward control is performed on the wind turbine according to the predicted incoming flow arrival time.

Through the above steps, the target wind speed of the shearing inflow wind outside an inductive zone is accurately calculated, so as to perform a feedforward control on the wind turbine when the inflow wind arrives.

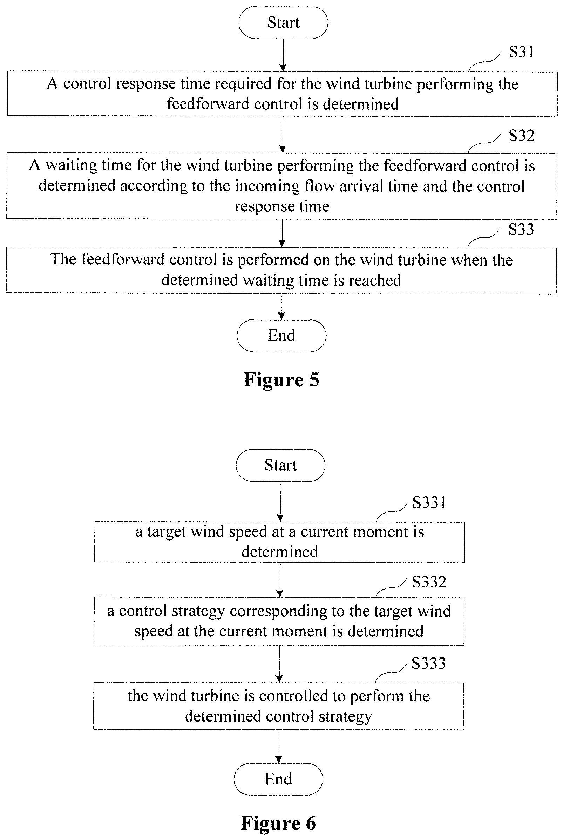

In an embodiment, a method shown in Figure 5 may be used to perform the feedforward control on the wind turbine. Figure 5 is a flow chart of steps of performing a feedforward control on the wind turbine according to the arrival time of the inflow wind according to an exemplary embodiment of this application.

Referring to Figure 5, in step S31, a control response time required for the wind turbine performing the feedforward control is determined.

For example, a time required for performing the feedforward control on the wind turbine once in the history may be used as the control response time. Alternatively, the control response time required for the wind turbine performing the feedforward control may also be set based on experience.

In step S32, a waiting time for the wind turbine performing the feedforward control is determined according to the predicted incoming flow arrival time and the determined control response time.

A difference between the predicted incoming flow arrival time and the determined control response time may be determined as the waiting time for the wind turbine executing the feedforward control.

In step S33, the feedforward control is performed on the wind turbine when the determined waiting time is reached.

It should be understood that the step of performing a feedforward control on the wind turbine according to the incoming flow arrival time shown in Figure 5 is merely an example, which will not be limited herein. Other ways for performing the feedforward control on the wind turbine based on the incoming flow arrival time may also be applied, for example, the feedforward control may be performed on the wind turbine when the predicted incoming flow arrival time is reached.

Figure 6 is a flow chart of steps of performing a feedforward control on the wind turbine according to an exemplary embodiment of this application.

In step S331, a target wind speed at a current moment is determined when the waiting time is reached.

In an exemplary embodiment of this application, inflow wind information at each spatial point position is obtained in real time, and the synthesized target wind speed is calculated in real time. In this case, at the current moment when the waiting time is reached, the target wind speed at this current moment is obtained.

In step S332, a control strategy corresponding to the target wind speed at the current moment is determined.

In an embodiment, wind speeds and control strategies corresponding to the wind speeds are stored in a control strategy table. In this case, a control strategy corresponding to the target wind speed at the current moment may be searched out from the control strategy table.

It should be understood that the above step of determining the control strategy corresponding to the target wind speed based on the control strategy table is merely an example, and the control strategy corresponding to the target wind speed may also be determined in other ways, which is not limited by this application.

In step S333, the wind turbine is controlled to perform the determined control strategy.

In an embodiment, in the feedforward control method for the wind turbine according to an exemplary embodiment of this application, in addition to the target wind speed that is not affected by the inductive effect, a target wind direction (which may refer to a wind direction of the inflow wind), target turbulence intensity, and a target wind shear factor that are not affected by the inductive effect may also be obtained.

In an embodiment, the feedforward control method for the wind turbine according to an embodiment of this application may further include: determining a target wind shear factor, a target wind direction, and/or target turbulence intensity based on the inflow wind information at multiple spatial point positions.

In this case, when the waiting time is reached, in addition to the target wind speed at the current moment, a target wind shear factor, a target wind direction and/or target turbulence intensity at the current moment may also be determined. At this time, the control strategy executed by the wind turbine may correspond to the target wind speed and at least one of the target wind shear factor, the target wind direction and the target turbulence intensity at the current moment.

In this case, wind resource parameters and control strategies corresponding to the wind resource parameters may be stored into the control strategy table. The wind resource parameters include the wind speed, and at least one of a wind shear factor, a wind direction and turbulence intensity.

As an example, the control strategy may include, but is not limited to, at least one control strategy for the following control items: yaw control, pitch control, load reduction control, shutdown control, and torque adjustment control of the wind turbine.

Control parameters, such as a yaw angle and pitch angle, corresponding to the control strategy may be stored in the control strategy of the control strategy table. In this case, the control parameter under the control strategy corresponding to the wind resource parameter at the current moment is searched out from the control strategy table, and is sent to the wind turbine. The wind turbine is controlled to operate based on the control parameter. In addition to the above control method, predetermined parameters (such as power generation) of the wind turbine may also be calculated. For example, the power generation of the wind turbine may be evaluated based on the target wind shear factor, the target wind direction, the target turbulence intensity, and/or the target wind speed.

As an example, a control strategy corresponding to the target wind speed includes: perform a pitch control on the wind turbine. A control strategy corresponding to the target wind speed and target wind direction includes: perform a yaw control and a shutdown control on the wind turbine. A control strategy corresponding to the target turbulence intensity includes: perform a torque adjustment control on the wind turbine. It should be understood that the corresponding relationship between the wind resource parameters and the control strategy listed above is merely an example, and those skilled in the art can establish a control strategy table according to actual requirements, which is not limited by this application.

Through the aforementioned feedforward control method, the wind turbine will respond "in time" through active control, therefore realizing a target of "in response to the wind and in response to the trend".

In an embodiment, the obtained inflow wind information at multiple spatial point positions may include first inflow wind information and second inflow wind information. For example, the first inflow wind information may include inflow wind information at each spatial point position above a plane where a centerline of beams emitted by the remote sensing measurement device is located. The second inflow wind information may include inflow wind information at each spatial point position below the plane where the centerline of the beams emitted by the remote sensing measurement device is located.

A process for determining the target wind shear factor, a process for determining the target wind direction, and a process for determining the target turbulence intensity are described hereinafter.

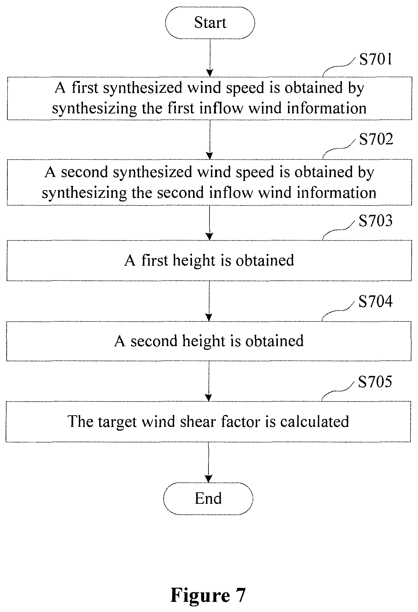

Steps for calculating a target wind shear factor based on the inflow wind information at multiple spatial point positions are described in conjunction with Figure 7 hereinafter.

Figure 7 is a flow chart of steps of calculating a target wind shear factor according to an exemplary embodiment of this application.

As shown in Figure 7, in step S701, a first synthesized wind speed is obtained by synthesizing the first inflow wind information.

For example, an average value of wind speeds of the inflow wind at multiple spatial point positions above the plane where the centerline of the beams emitted by the remote sensing measurement device is located may be determined as the first synthesized wind speed. The first synthesized wind speed may also be obtained in other ways, which is not limited by this application.

**In** step S702, a second synthesized wind speed is obtained by synthesizing the second inflow wind information.

For example, an average value of wind speeds of the inflow wind at multiple spatial point positions below the plane where the centerline of the beams emitted by the remote sensing measurement device is located may be determined as the second synthesized wind speed. The second synthesized wind speed may also be obtained in other ways, which is not limited by this application.

In step S703, an average value of heights of multiple spatial point positions above the plane where the centerline of the beams emitted by the remote sensing measurement device is located is calculated, to obtain a first height.

The inflow wind information at multiple spatial point positions may also include height of each spatial point position. The average value of heights of multiple spatial point positions above the plane where the centerline of the beams emitted by the remote sensing measurement device is located is calculated and determined as the first height.

In step S704, an average value of heights of multiple spatial point positions below the plane where the centerline of the beams emitted by the remote sensing measurement device is located is calculated, to obtain a second height.

In step S705, the target wind shear factor is calculated according to the first synthesized wind speed, the second synthesized wind speed, the first height and the second height.

As an example, the target wind shear factor is calculated according to the following formula (5). ${V}_{Shear} = \frac{ln \left(\frac{{HWS}_{+}}{{HWS}_{-}}\right)}{ln \left(\frac{{H}_{+}}{{H}_{-}}\right)}$ (5)

In the formula (5), *V_{Shear}* represents the target wind shear factor (that is, a vertical wind shear factor), *HWS,* represents the first synthesized wind speed, *HWS₋* represents the second synthesized wind speed, *H₊* represents the first height, and *H₋* represents the second height.

It should be understood that in above process, a target wind shear factor for multiple spatial point positions is calculated, but this application is not limited to this. A wind shear factor for each cross-section may be calculated. In this case, the target wind shear factor includes wind shear factors corresponding to respective cross-sections. As an example, the wind shear factor corresponding to one cross-section may be calculated based on the inflow wind information at multiple spatial point positions at the cross-section by utilizing the above formula (5).

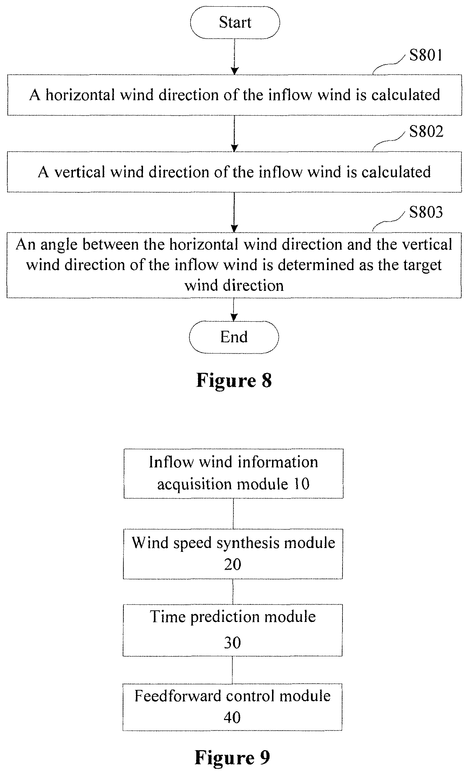

Steps for calculating a target wind direction based on the inflow wind information at multiple spatial point positions are described in conjunction with Figure 8 hereinafter.

Figure 8 is a flow chart of steps of determining a target wind direction according to an exemplary embodiment of this application.

Referring to Figure 8, in step S801, a horizontal wind direction of the inflow wind is calculated according to the first inflow wind information, the second inflow wind information, and a zenith angle of each beam emitted by the remote sensing measurement device.

As an example, the horizontal wind direction of the inflow wind is calculated according to the following formula (6). ${U}_{+} = \frac{\overline{{RWS}_{0}} + \overline{{RWS}_{1}}}{2 cos θ}$ (6)

In the formula (6), *U*₊ represents a horizontal wind direction of the inflow wind, *̅R̅W̅S̅*̅₀̅ represents an average wind speed of the inflow wind at multiple spatial points above the plane where the centerline of the beams emitted by the remote sensing measurement device is located, *̅R̅W̅S̅*̅₁̅ represents an average wind speed of the inflow wind at multiple spatial points below the plane where the centerline of the beams emitted by the remote sensing measurement device is located, and *θ* represents an average value of zenith angles of all beams.

In step S802, a vertical wind direction of the inflow wind is calculated according to the first inflow wind information, the second inflow wind information, the zenith angle of each beam emitted by the remote sensing measurement device, and an azimuth angle of each beam emitted by the remote sensing measurement device relative to the plane where the centerline of the beams is located.

As an example, the vertical wind direction of the inflow wind is calculated according to the following formula (7). ${V}_{+} = \frac{\overline{{RWS}_{0}} - \overline{{RWS}_{1}}}{2 sin θ + cos φ}$ (7)

In the formula (7), *V*₊ represents a vertical wind direction of the inflow wind, and *φ* represents an average value of azimuth angles of all beams relative to a predetermined plane.

In step S803, an angle between the horizontal wind direction and the vertical wind direction of the inflow wind is determined as the target wind direction.

As an example, the target wind direction of the inflow wind is calculated according to the following formula (8). ${Ω}_{+} = atan 2 \left({U}_{+}; {V}_{+}\right)$ (8)

In the formula (8), Ω₊ represents a target wind direction, and atan2( ) represents a function for calculating an angle between the horizontal wind direction and the vertical wind direction of the inflow wind.

Steps of determining target turbulence intensity based on the inflow wind information at multiple spatial point positions are described hereinafter.

For example, the target turbulence intensity may be obtained by the following steps: synthesizing the inflow wind information into a target wind speed; calculating a wind speed standard deviation of the target wind speed within a predetermined time period and an average wind speed of the target wind speed within the predetermined time period; and determining a ratio of the wind speed standard deviation to the average wind speed as the target turbulence intensity.

It should be understood that in the above process, the target turbulence intensity for the multiple spatial point positions is calculated, but this application is not limited to this. Furthermore, turbulence intensity for each cross-section may also be calculated. In this case, the target turbulence intensity includes the turbulence intensity corresponding to each cross-section. As an example, turbulence intensity corresponding to one cross-section is calculated by the above method based on the inflow wind information at multiple spatial point positions of the cross-section.

It should be understood that the above methods for determining the target wind direction, the target wind shear factor, and the target turbulence intensity are merely examples, and this application is not limited to this. The target wind direction, the target wind shear factor, and the target turbulence intensity may also be determined in other ways.

Figure 9 is a block diagram of a feedforward control device for a wind turbine according to an exemplary embodiment of this application.

As shown in Figure 9, the feedforward control device for a wind turbine according to the exemplary embodiment of this application includes: an inflow wind information acquisition module 10, a wind speed synthesis module 20, a time prediction module 30, and a feedforward control module 40.

The inflow wind information acquisition module 10 is configured to obtain inflow wind information at multiple spatial point positions in front of the wind turbine through a remote sensing measurement device. The multiple spatial point positions are distributed in multiple different cross-sections, and the multiple different cross-sections have different distances to the wind turbine. As an example, the inflow wind information includes, but is not limited to, inflow wind speeds at the multiple spatial point positions.

In an embodiment, a remote sensing measurement device may be provided on the top of a nacelle of the wind turbine, which is configured to detect inflow wind information at multiple spatial point positions. In this case, the inflow wind information acquisition module 10 obtains the inflow wind information at multiple spatial point positions. As an example, the remote sensing measurement device includes, but is not limited to, a lidar.

The wind speed synthesis module 20 is configured to synthesize the obtained inflow wind information into a target wind speed.

In an embodiment of this application, the wind speed synthesis module 20 may perform a wind speed synthesis process for each beam or for each cross-section. Various wind speed synthesis methods will be introduced separately hereinafter.

In a first embodiment, the wind speed synthesis module 20 performs a wind speed synthesis process based on each cross-section of the remote sensing measurement device, to obtain the target wind speed.

In this case, the wind speed synthesis module 20 is configured to: for each cross-section, determine a cross-section average wind speed of the cross-section according to the inflow wind information at each spatial point position of the cross-section; and obtain the target wind speed based on cross-section average wind speeds of all cross-sections.

For example, a cross-section average wind speed of one cross-section may be an average value of wind speeds of inflow wind at multiple spatial point positions of the cross-section.

Two ways of obtaining the target wind speed based on the cross-section average wind speed of each cross-section will be exemplarily introduced hereinafter.

In one embodiment, the wind speed synthesis module 20 is configured to obtain the target wind speed according to cross-section average wind speeds of all cross-sections and inductive effect influence coefficients corresponding to respective cross-sections.

For example, the wind speed synthesis module 20 is configured to: for each cross-section, set a weight corresponding to the cross-section, and calculate a ratio of a cross-section average wind speed to an inductive effect influence coefficient corresponding to the cross-section; calculate a weighted sum of the ratios and the weights corresponding to respective cross-sections; and determine the weighted sum as the target wind speed.

As an example, the wind speed synthesis module 20 determines the inductive effect influence coefficients corresponding to the respective cross-sections in the following manner.

Specifically, a certain cross-section is selected from all cross-sections as a reference cross-section, and an inductive effect influence coefficient of the reference cross-section is set. The inductive effect influence coefficients of other reference cross-sections are obtained, by adjusting the inductive effect influence coefficient of the reference cross-section according to distances between the other cross-sections except the reference cross-section in all cross-sections and the reference cross-section.

As an example, the reference cross-section may be any one of all cross-sections. Specifically, the reference cross-section may be a cross-section at a position where the wind speed is least affected by the inductive effect among all the cross-sections.

In another embodiment, the wind speed synthesis module 20 may obtain the target wind speed by eliminating time phase differences among average wind speeds of all cross-sections.

For example, the wind speed synthesis module 20 is configured to obtain an intermediate wind speed by synthesizing the cross-section average wind speeds of all cross-sections, to eliminate the time phase differences among the cross-section average wind speeds of all cross-sections; and obtain the target wind speed according to the intermediate wind speed and a given inductive effect influence coefficient.

In an embodiment, the wind speed synthesis module 20 may determine the given inductive effect influence coefficient in the following manner.

For example, weights corresponding to respective cross-sections are set, and inductive effect influence coefficients corresponding to the respective cross-sections are determined. A weighted sum of the inductive effect influence coefficients and the weights corresponding to the respective cross-sections is calculated and determined as the given inductive effect influence coefficient.

As an example, the wind speed synthesis module 20 may obtain the intermediate wind speed in the following manner.

For each cross-section, an estimated wind speed when inflow wind reaches the designated cross-section from the cross-section is determined, according to a distance from the cross-section to the designated cross-section and a cross-section average wind speed of the cross-section. An average value of all estimated wind speeds is determined as the intermediate wind speed.

For example, the wind speed synthesis module 20 may determine the estimated wind speed when the inflow wind reaches the designated cross-section from any cross-section in the following way.

A flowing time required for the inflow wind to flow from a cross-section to the designated cross-section is calculated according to a distance from the cross-section to the designated cross-section and a cross-section average wind speed of the cross-section. A cross-section average wind speed of the designated cross-section determined after the flowing time is determined as the estimated wind speed when the inflow wind reaches the designated cross-section from the cross-section.

In a second embodiment, the wind speed synthesis module 20 performs a wind speed synthesis process for each beam emitted by a lidar, to obtain the target wind speed.

In this case, the wind speed synthesis module 20, for each beam emitted by the lidar, determines a beam synthesized wind speed of the beam according to inflow wind information at multiple spatial point positions on the beam and inductive effect influence coefficients corresponding to the multiple spatial point positions; and determines an average value of beam synthesized wind speeds of all beams as the target wind speed.

The wind speed synthesis module 20 may determine the beam synthesized wind speed of the beam, by setting weights for respective spatial point positions, calculating ratios of inflow wind information at spatial point positions on the beam to corresponding inductive effect influence coefficients, calculating a weighted sum of the ratios and the corresponding weights as the beam synthesized wind speed.

In an exemplary embodiment of this application, the target wind speed may also be obtained based on a wind speed fitting curve, beside the wind speed synthesis method performed for all beams or all cross-sections.

In a third embodiment, the wind speed synthesis module 20 is configured to obtain the target wind speed based on a wind speed fitting curve of inflow wind information at multiple spatial point positions.

In this case, the wind speed synthesis module 20 is configured to: obtain a wind speed curve of the inflow wind flowing from a target point to the impeller plane according to the inflow wind information at multiple spatial point positions, integrate the wind speed curve, and determine a ratio of an integral area to a distance between the target point and the impeller plane as the target wind speed.

The time prediction module 30 is configured to predict an incoming flow arrival time when inflow wind from a target point reaches an impeller plane, based on the synthesized target wind speed.

In the first way, the time prediction module 30 predicted the incoming flow arrival time based on the target wind speed and a distance between a position of the target point and the impeller plane.

For example, the time prediction module 30 may determine the incoming flow arrival time, based on a ratio of the distance between the position of the target point and the impeller plane to the target wind speed.

In the second way, the time prediction module 30 predicts the incoming flow arrival time based on the wind speed curve and the target wind speed.

In the case that the target wind speed is obtained based on the wind speed curve of the inflow wind information at multiple spatial point positions, the time prediction module 30 calculates an integration of the wind speed curve from the target point to the impeller plane, and determines a ratio of an integral area to the target wind speed as the incoming flow arrival time required for the inflow wind to reach the impeller plane from the target point.

**In** the third way, the time prediction module 30 predicts the incoming flow arrival time required for the inflow wind to reach the impeller plane from the target point, based on a corresponding relationship between the target wind speed and the incoming flow arrival time.

For example, the time prediction module 30 may establish in advance a correspondence relationship between the target wind speed and a flowing time required for the inflow wind at the target point to reach the impeller plane.

After the wind speed synthesis module 20 obtains the target wind speed, the time prediction module 30 may search a flowing time corresponding to the target wind speed according to the correspondence relationship established in advance, and determines the searched flowing time as the incoming flow arrival time.

In the fourth way, the time prediction module 30 predicts the incoming flow arrival time required for the inflow wind at the target point to reach the impeller plane, by calculating the incoming flow arrival time in sections.

For example, the time prediction module 30 calculates a first flowing time required for the inflow wind to flow from a predetermined cross-section to a designated cross-section, calculates a second flowing time required for the inflow wind to flow from the designated cross-section to the impeller plane, and determines a sum of the first flowing time and the second flowing time as the incoming flow arrival time required for the inflow wind at the target point to reach the impeller plane. The predetermined cross-section has a distance to the impeller plane greater than a distance from the designated cross-section to the impeller plane.

The feedforward control module 40 performs a feedforward control process on the wind turbine according to the incoming flow arrival time.

For example, the feedforward control module 40 may determine a control response time required for the wind turbine performing a feedforward control; determine a waiting time for the wind turbine executing the feedforward control, according to the predicted incoming flow arrival time and the determined control response time; and perform the feedforward control on the wind turbine when the determined waiting time is reached.

A difference between the predicted incoming flow arrival time and the determined control response time may be determined as the waiting time for the wind turbine executing the feedforward control.

The feedforward control module 40 may perform the feedforward control on the wind turbine in following steps: determining a target wind speed at a current moment when the waiting time is reached, determining a control strategy corresponding to the target wind speed at the current moment, and controlling the wind turbine to execute the determined control strategy.

Wind speeds and control strategies corresponding to the wind speeds may be stored in a control strategy table. In this case, the feedforward control module 40 may search out a control strategy corresponding to the target wind speed at the current moment, from the control strategy table.

In an embodiment, in the feedforward control device for the wind turbine according to an exemplary embodiment of this application, in addition to the target wind speed that is not affected by the inductive effect, a target wind direction, target turbulence intensity, and a target wind shear factor that are not affected by the inductive effect may also be obtained.

In this case, the feedforward control device for the wind turbine according to an exemplary embodiment of this application further includes a target parameter determination module (not shown in figures) configured to determine a target wind shear factor, a target wind direction, and/or target turbulence intensity based on the inflow wind information at multiple spatial point positions.

In this case, when the waiting time is reached, the feedforward control module 40 is further configured to determine the target wind shear factor, the target wind direction and/or the target turbulence intensity at the current moment, in addition to determining the target wind speed at the current moment. At this time, the control strategy executed by the wind turbine may correspond to the target wind speed and at least one of the target wind shear factor, the target wind direction and the target turbulence intensity at the current moment.

In this case, wind resource parameters and control strategies corresponding to the wind resource parameters may be stored into the control strategy table. The wind resource parameters include the wind speed, and at least one of a wind shear factor, a wind direction and turbulence intensity.

In an embodiment, the inflow wind information at multiple spatial point positions obtained by the inflow wind information acquisition module 10 may include first inflow wind information and second inflow wind information. For example, the first inflow wind information may include inflow wind information at each spatial point position above a plane where a centerline of beams emitted by the remote sensing measurement device is located. The second inflow wind information may include inflow wind information at each spatial point position below the plane where the centerline of the beams emitted by the remote sensing measurement device is located.

A process for determining the target wind shear factor, a process for determining the target wind direction, and a process for determining the target turbulence intensity are described hereinafter.

The target parameter determination module may calculate the target wind shear factor in the following ways.

For example, the target parameter determination module is configured to: obtain a first synthesized wind speed by synthesizing the first inflow wind information; obtain a second synthesized wind speed by synthesizing the second inflow wind information; calculate an average value of heights of multiple spatial points above the plane where the centerline of the beams emitted by the remote sensing measurement device is located, to obtain a first height; calculate an average value of heights of multiple spatial points below the plane where the centerline of the beams emitted by the remote sensing measurement device is located, to obtain a second height; and calculate the target wind shear factor according to the first synthesized wind speed, the second synthesized wind speed, the first height and the second height.

The target parameter determination module may determine the target wind direction in the following ways.

For example, the target parameter determination module is configured to: calculate a horizontal wind direction of the inflow wind according to the first inflow wind information, the second inflow wind information, and a zenith angle of each beam emitted by the remote sensing measurement device; calculate a vertical wind direction of the inflow wind according to the first inflow wind information, the second inflow wind information, the zenith angle of each beam emitted by the remote sensing measurement device, an azimuth angle of each beam emitted by the remote sensing measurement device relative to a plane where the centerline of the beams is located; and determine an angle between the horizontal wind direction and the vertical wind direction of the inflow wind as the target wind direction.

The target parameter determination module may determine the target turbulence intensity in the following ways.

For example, the target parameter determination module is configured to: synthesize a target wind speed by the inflow wind information; calculate a wind speed standard deviation of the target wind speed within a predetermined time period, and an average wind speed of the target wind speed within the predetermined time period; and determining a ratio of the wind speed standard deviation to the average wind speed as the target turbulence intensity.

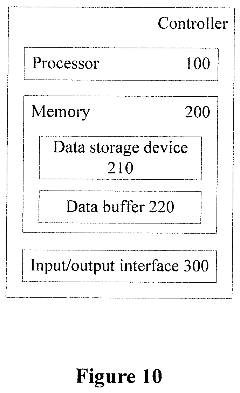

Figure 10 is a block diagram of a control system of a wind turbine according to an exemplary embodiment of this application.

As shown in Figure 10, the controller of a wind turbine according to the embodiment of this application includes: a processor 100, a memory 200 for storing a computer program, and an input/output interface 300. The computer program, when executed by the processor, the aforementioned feedforward control method for the wind turbine is implemented. The input/output interface 300 is configured to connect to various input/output devices. The controller may be a main controller inside the wind turbine, or a sub-controller that interacts with the main controller. In an embodiment, the controller may be arranged in a centralized control system of a wind farm, and is configured to send instructions to all wind turbines in the wind farm. The instructions include control instructions or operation scheduling instructions from the power grid.

The feedforward control method for the wind turbine shown in Figure 1 may be executed in the processor 100 shown in Figure 10. In other words, the modules shown in Figure 9 may be implemented by a general-purpose hardware processor such as a digital signal processor, field programmable gate arrays, etc. Alternatively, the modules shown in Figure 9 may also be implemented by a dedicated hardware processor such as a dedicated chip, or be implemented entirely through computer programs. For example, it may be implemented as various modules in the processor 100 shown in Figure 10.

In an embodiment, the memory 200 according to an exemplary embodiment of this application may include: a data storage device 210 for storing inflow wind information at multiple spatial point positions acquired from a remote sensing measurement device. As an example, the data storage device 210 may be various types of storage units capable of storing data for a long time.

After the processor 100 obtains the inflow wind information at multiple spatial point positions from the remote sensing measurement device, it stores the inflow wind information in the data storage device 210. In addition, the processor 100 may also store a target wind speed, a target wind direction, a target wind shear factor, and target turbulence intensity in the data storage device 210.

Optionally, a control strategy table can be stored in the processor 100. In a determination process of the control strategy, directly local search can increase the processing speed. The control strategy table may also be stored in other memory besides the processor, which is not limited by this application. For example, the control strategy table may be stored in the data storage device 210. The data storage device 210 reads and searches the control strategy table when the processor 100 determines a control strategy, which can reduce the storage burden of the processor.

In an embodiment, the memory 200 according to an exemplary embodiment of this application may further include: a data buffer 220. The data buffer 220 is a storage unit with a fixed storage capacity, and only stores input data from the current time to a certain time duration before the current time. With continuous input of later data, the data stored earlier will be automatically overwritten.

As an example, the data buffer 220 may be various memories capable of storing data for a short time period for the processor 100.

In an exemplary embodiment of this application, the target wind speed, target wind direction, target wind shear factor, and target turbulence intensity obtained by the processor 100 may be stored in the data storage device 210 or in the data buffer 220 as well.

In this case, when the waiting time is reached, the processor 100 is configured to search the data buffer 220 for the target wind speed (or other wind resource parameters) calculated at the current moment (the moment when the waiting time is reached), and search out a control strategy matching the target wind speed from the control strategy table, to control the wind turbine.

A control system of a wind turbine is also provided according to an embodiment of this application. The control system includes a remote sensing measurement device and a controller.

Specifically, the remote sensing measurement device is configured to detect inflow wind information at multiple spatial point positions in front of the wind turbine. The multiple spatial point positions are distributed in multiple different cross-sections, and the multiple different cross-sections have different distances to the wind turbine.

In an embodiment, the remote sensing measurement device may be set on the top of a nacelle of the wind turbine. As an example, the remote sensing measurement device may include, but is not limited to, a lidar.

The controller is configured to obtain the inflow wind information at multiple of spatial point positions from the remote sensing measurement device, to realize the aforementioned feedforward control method for the wind turbine.

A computer-readable storage medium stored with a computer program is provided according to an exemplary embodiment of this application. The computer program stored in the computer-readable storage medium, when executed by the processor, causes the processor to execute the aforementioned feedforward control method for a wind turbine. The computer-readable recording medium may be any data storage device that can store data read by a computer system, such as a read-only memory, a random access memory, a read-only optical disk, a magnetic tape, a floppy disk, an optical data storage device, and a carrier wave (such as data transmission through the Internet via a wired or wireless transmission path).

According to the feedforward control method and device for the wind turbine, and the control system thereof according to the exemplary embodiments of this application, the wind speed of the inflow wind that is not affected by the induction effect is obtained through an effective wind speed synthesis method, which avoids the problem of inaccuracy measurement of wind speed by the existing wind measuring device.

In addition, according to the feedforward control method and device for the wind turbine, and the control system thereof according to the exemplary embodiments of this application, influence of the inductive effect is effectively eliminated, and the wind speed, wind direction, turbulence intensity and wind shear factor of the inflow wind that are not affected by the inductive effect are obtained, therefore finally realizing accurate power generation assessment and control of the wind turbine, and minimizing the load caused by uncertainty of the inflow wind of the wind turbine.

Furthermore, according to the feedforward control method and device for the wind turbine, and the control system thereof according to the exemplary embodiments of this application, the wind speed is obtained by synthesizing the inflow wind information at multiple spatial point positions, thus the wind speed of the inflow wind obtained is more accurate compared with a wind speed obtained by a currently widely used way of measuring wind speed at a single point in space that is affected by the inductive effect.

The technical solutions of this application have been shown and described with reference to the embodiments. Those skilled in the art should understand that various modifications and changes can be made to these embodiments without departing from the spirit and scope of this application as defined by the claims.

## Claims

1. A feedforward control method for a wind turbine, comprising:
obtaining (S10) inflow wind information at a plurality of spatial point positions in front of the wind turbine through a remote sensing measurement device, wherein the plurality of spatial point positions are distributed in a plurality of different cross-sections, and the plurality of different cross-sections have different distances to the wind turbine;
synthesizing (S20) the obtained inflow wind information into a target wind speed;
predicting (S30) an incoming flow arrival time when inflow wind from a target point reaches an impeller plane, based on the synthesized target wind speed; and
performing (S40) a feedforward control on the wind turbine according to the predicted incoming flow arrival time,
wherein the synthesizing (S20) the obtained inflow wind information into a target wind speed comprises:
determining respectively an average wind speed of each cross-section of the inflow wind according to the inflow wind information at the plurality of spatial point positions of each cross-section;
determining inductive effect influence coefficients corresponding to respective cross-sections; and
obtaining the target wind speed based on average wind speeds of all cross-sections and inductive effect influence coefficients of respective cross-sections.

2. The feedforward control method according to claim 1, wherein the determining inductive effect influence coefficients corresponding to respective cross-sections comprises:
selecting one cross-section from all cross-sections as a reference cross-section;
setting an inductive effect influence coefficient of the reference cross-section; and
adjusting the inductive effect influence coefficient of the reference cross-section according to distances between other cross-sections except the reference cross-section in all cross-sections and the reference cross-section, to obtain inductive effect influence coefficients of the other cross-sections.

3. The feedforward control method according to claim 1, wherein the obtaining the target wind speed according to the wind speeds of all cross-sections and inductive effect influence coefficients of respective cross-sections comprises:
setting weights corresponding to the respective cross-sections;
calculating ratios of average wind speeds of the respective cross-sections to the inductive effect influence coefficients corresponding to the respective cross-sections; and
determining a weighted sum of the ratios corresponding to the respective cross-sections and the weights corresponding to the respective cross-sections as the target wind speed.

4. The feedforward control method according to claim 1, wherein the obtaining the target wind speed based on average wind speeds of all cross-sections comprises:
obtaining an intermediate wind speed by synthesizing cross-section average wind speeds of all cross-sections, to eliminate time-phase differences among the cross-section average wind speeds of all cross-sections; and
obtaining the target wind speed according to the intermediate wind speed and a given inductive effect influence coefficient; and
wherein the given inductive effect influence coefficient is determined by
setting weights for respective cross-sections;
determining inductive effect influence coefficients corresponding to the respective cross-sections; and
calculating a weighted sum of the inductive effect influence coefficients corresponding to the respective cross-sections and the weights for the respective cross-sections, and determining the weighted sum as the given inductive effect influence coefficient.

5. The feedforward control method according to claim 4, wherein the obtaining an intermediate wind speed by synthesizing cross-section average wind speeds of all cross-sections comprises:
for each cross-section, determining an estimated wind speed when the inflow wind reaches the designated cross-section from the cross-section according to a distance from the cross-section to the designated cross-section and the cross-section average wind speed of the cross-section, and
determining an average value of all estimated wind speeds as the intermediate wind speed.

6. The feedforward control method according to claim 5, wherein the estimated wind speed when the inflow wind reaches the designated cross-section from the cross-section is determined by:
calculating a flowing time required for the inflow wind to flow from the cross-section to the designated cross-section according to the distance from the cross-section to the designated cross-section and the cross-section average wind speed of the cross-section; and
determining a designated average wind speed of the designated cross-section after the flowing time as the estimated wind speed when the inflow wind flows from the cross-section to the designated cross-section.

7. The feedforward control method according to claim 1, wherein the remote sensing measurement device comprises a lidar.

8. The feedforward control method according to claim 7, wherein the synthesizing the obtained inflow wind information into a target wind speed comprises:
for each beam emitted by the lidar, determining a beam synthesized wind speed of the beam according to inflow wind information at a plurality of spatial point positions on the beam and inductive effect influence coefficients corresponding to the plurality of spatial point positions; and
determining an average value of beam synthesized wind speeds of all beams as the target wind speed.

9. The feedforward control method according to claim 8, wherein the beam synthesized wind speed of the beam is determined by:
setting a weight for each spatial point position;
calculating a ratio of inflow wind information at each spatial point position on the beam to corresponding inductive effect influence coefficient; and
determining a weighted sum of the ratios and the corresponding weights, and determining the weighted sum as the beam synthesized wind speed of the beam.

10. The feedforward control method according to claim 1, wherein predicting an incoming flow arrival time when inflow wind from a target point reaches an impeller plane, based on the synthesized target wind speed comprises:
determining a distance from a position of the target point to the impeller plane; and
determining a ratio of the distance to the synthesized target wind speed, as the incoming flow arrival time.

11. The feedforward control method according to claim 1, wherein the synthesizing the obtained inflow wind information into a target wind speed comprises:
obtaining a wind speed curve of the inflow wind flowing from the target point to the impeller plane according to the obtained inflow wind information at the plurality of spatial point positions; and
integrating the obtained wind speed curve, calculating a ratio of an integral area to a distance between the target point and the impeller plane, and determining the ratio as the target wind speed, and
wherein the predicting an incoming flow arrival time when inflow wind from a target point reaches an impeller plane, based on the synthesized target wind speed comprises:
determining a ratio of the integral area to the target wind speed, as the incoming flow arrival time when inflow wind from the target point reaches the impeller plane.

12. The feedforward control method according to claim 1, wherein the predicting an incoming flow arrival time when inflow wind from a target point reaches an impeller plane, based on the synthesized target wind speed comprises:
searching out an incoming flow arrival time corresponding to the target wind speed according to a correspondence relationship between target wind speeds and incoming flow arrival times; and
determining the searched incoming flow arrival time as the incoming flow arrival time when the inflow wind from the target point reaches the impeller plane.

13. The feedforward control method according to claim 1, wherein the predicting an incoming flow arrival time when inflow wind from a target point reaches an impeller plane, based on the synthesized target wind speed comprises:
determining a first flowing time required for the inflow wind to flow from a predetermined cross-section to a designated cross-section;
determining a second flowing time required for the inflow wind to flow from the designated cross-section to the impeller plane;
obtaining the incoming flow arrival time when the inflow wind from the target point reaches the impeller plane, according to the determined first flowing time and the determined second flowing time.

14. The feedforward control method according to claim 13, wherein the predicting an incoming flow arrival time when inflow wind from a target point reaches an impeller plane, based on the synthesized target wind speed comprises:
determining a third flowing time required for the inflow wind to flow from the target point to the farthest detection distance, in a case that a location of the target point is greater than the farthest detection distance of the remote sensing measurement device; and
obtaining the incoming flow arrival time when the inflow wind from the target point reaches the impeller plane, based on the first flowing time, the second flowing time, and the third flowing time.

15. The feedforward control method according to claim 1, wherein the performing a feedforward control on the wind turbine according to the predicted incoming flow arrival time comprises:
determining (S31) a control response time for the wind turbine performing a feedforward control;
determining (S32) a waiting time for the wind turbine performing the feedforward control according to the predicted incoming flow arrival time and the control response time; and
performing (S33) the feedforward control on the wind turbine when the determined waiting time is reached.

16. The feedforward control method according to claim 15, wherein the waiting time for the wind turbine performing the feedforward control is a difference between the predicted incoming flow arrival time and the control response time.

17. The feedforward control method according to claim 15, wherein performing the feedforward control on the wind turbine when the determined waiting time is reached comprises:
determining (S331) a target wind speed at a current moment when the waiting time is reached;
determining (S332) a control strategy corresponding to the target wind speed at the current moment; and
controlling (S333) the wind turbine to execute the determined control strategy.

18. The feedforward control method according to claim 17, wherein determining a control strategy corresponding to the target wind speed at the current moment comprises:
searching out the control strategy corresponding to the target wind speed at the current moment from a control strategy table, wherein wind speeds and control strategies corresponding to the wind speeds are stored into the control strategy table.

19. The feedforward control method according to claim 17, further comprising:
determining at least a target wind shear factor, a target wind direction, or target turbulence intensity, based on the obtained inflow wind information at the plurality of spatial point positions,
wherein performing the feedforward control on the wind turbine when the determined waiting time is reached further comprises: determining at least the target wind shear factor, the target wind direction, or the target turbulence intensity at the current moment, and
wherein the determined control strategy is a control strategy corresponding to the target wind speed, and at least one of the target wind shear factor, the target wind direction and the target turbulence intensity at the current moment.

20. The feedforward control method according to claim 19, wherein the obtained inflow wind information comprises first inflow wind information and second inflow wind information;
the first inflow wind information comprises inflow wind information at each spatial point position above a plane where a centerline of beams emitted by the remote sensing measurement device is located, and the second inflow wind information comprises inflow wind information at each spatial point position below the plane where the centerline of the beams emitted by the remote sensing measurement device is located;
wherein the determining the target wind shear factor comprises:
synthesizing (S701) the first inflow wind information to obtain a first synthesized wind speed;
synthesizing (S702) the second inflow wind information to obtain a second synthesized wind speed;
calculating an average value of heights of a plurality of spatial point positions above the plane where the centerline of the beams emitted by the remote sensing measurement device is located, to obtain (S703) a first height;
calculating an average value of heights of a plurality of spatial point positions below the plane where the centerline of the beams emitted by the remote sensing measurement device is located, to obtain (S704) a second height; and
calculating (S705) the target wind shear factor according to the first synthesized wind speed, the second synthesized wind speed, the first height and the second height.

21. The feedforward control method according to claim 20, wherein the determining the target wind direction comprises:
calculating (S801) a horizontal wind direction of the inflow wind according to the first inflow wind information, the second inflow wind information, and a zenith angle of each beam emitted by the remote sensing measurement device;
calculating (S802) a vertical wind direction of the inflow wind according to the first inflow wind information, the second inflow wind information, the zenith angle of each beam emitted by the remote sensing measurement device, and an azimuth angle of each beam emitted by the remote sensing measurement device relative to the plane where the centerline of the beams is located; and
determining (S803) an angle between the horizontal wind direction and the vertical wind direction of the inflow wind, as the target wind direction.

22. The feedforward control method according to claim 19, wherein the determining the target turbulence intensity comprises:
synthesizing the obtained inflow wind information at the plurality of spatial point positions, into the target wind speed;
calculating a wind speed standard deviation of the target wind speed within a predetermined time period and an average wind speed of the target wind speed within the predetermined time period; and
determining a ratio of the wind speed standard deviation to the average wind speed, as the target turbulence intensity.

23. A feedforward control device for a wind turbine, comprising:
an inflow wind information acquisition module (10) configured to obtain inflow wind information at a plurality of spatial point positions in front of the wind turbine through a remote sensing measurement device, wherein the plurality of spatial point positions are distributed in a plurality of different cross-sections, and the plurality of different cross-sections have different distances to the wind turbine;
a wind speed synthesis module (20) configured to synthesize the obtained inflow wind information into a target wind speed;
a time prediction module (30) configured to predict an incoming flow arrival time when inflow wind from a target point reaches an impeller plane, based on the synthesized target wind speed; and
a feedforward control module (40) configured to perform a feedforward control on the wind turbine according to the predicted incoming flow arrival time,
**characterized in that**
the wind speed synthesis module (20) is further configured to: determine respectively an average wind speed of each cross-section of the inflow wind according to the inflow wind information at the plurality of spatial point positions of each cross-section; determine inductive effect influence coefficients corresponding to respective cross-sections; and obtain the target wind speed based on average wind speeds of all cross-sections and inductive effect influence coefficients of respective cross-sections.

24. A controller of a wind turbine, comprising:
a processor (100);
an input/output interface (300);
a memory (200) configured to store a computer program; and
the processor (100) is configured to execute the computer program to implement the feedforward control method for the wind turbine according to any one of claims 1 to 22.

25. A control system of a wind turbine, comprising:
a remote sensing measurement device configured to detect inflow wind information at a plurality of spatial point positions in front of the wind turbine, wherein the plurality of spatial point positions are distributed in a plurality of different cross-sections, and the plurality of different cross-sections have different distance to the wind turbine; and
a controller configured to obtain the inflow wind information at the plurality of spatial point positions from the remote sensing measurement device, to implement the feedforward control method for the wind turbine according to any one of claims 1 to 22.

26. A computer-readable storage medium stored with a computer program, wherein the computer program, when executed by a processor (100), implements the feedforward control method for the wind turbine according to any one of claims 1 to 22.

## Patentansprüche

1. Vorsteuerungsverfahren für eine Windkraftanlage, folgende Schritte umfassend:
Erhalten (S10) von Anströmwindinformationen an einer Vielzahl von räumlichen Punktpositionen vor der Windkraftanlage durch eine Fernerkundungsmessvorrichtung, wobei die Vielzahl von räumlichen Punktpositionen in einer Vielzahl von verschiedenen Querschnitten verteilt ist und wobei die Vielzahl von verschiedenen Querschnitten verschiedene Entfernungen zu der Windkraftanlage aufweist;
Zusammenfassen (S20) der erhaltenen Anströmwindinformationen zu einer Sollwindgeschwindigkeit;
Vorhersagen (S30) eines Eintreffzeitpunkts der ankommenden Strömung basierend auf der zusammengefassten Sollwindgeschwindigkeit, wenn Anströmwind von einem Zielpunkt eine Impeller-Ebene erreicht; und
Durchführen (S40) einer Vorsteuerung an der Windkraftanlage gemäß dem vorhergesagten Eintreffzeitpunkt der ankommenden Strömung, wobei das Zusammenfassen (S20) der erhaltenen Anströmwindinformationen zu einer Sollwindgeschwindigkeit folgende Schritte umfasst:
Ermitteln einer Durchschnittswindgeschwindigkeit jedes Querschnitts des Anströmwinds gemäß den Anströmwindinformationen an der Vielzahl von räumlichen Punktpositionen jedes Querschnitts;
Ermitteln von jeweiligen Querschnitten entsprechenden Induktionswirkungseinflusskoeffizienten;
Erhalten der Sollwindgeschwindigkeit basierend auf Durchschnittswindgeschwindigkeiten aller Querschnitte und auf Induktionswirkungseinflusskoeffizienten jeweiliger Querschnitte.

2. Vorsteuerungsverfahren nach Anspruch 1, wobei das Ermitteln von jeweiligen Querschnitten entsprechenden Induktionswirkungseinflusskoeffizienten folgende Schritte umfasst:
Auswählen eines Querschnitts aus allen Querschnitten als einen Referenzquerschnitt;
Einstellen eines Induktionswirkungseinflusskoeffizienten des Referenzquerschnitts; und
Anpassen des Induktionswirkungseinflusskoeffizienten des Referenzquerschnitts in Abhängigkeit von Entfernungen zwischen anderen Querschnitten, ausgenommen den Referenzquerschnitt, von allen Querschnitten und dem Referenzquerschnitt, um Induktionswirkungseinflusskoeffizienten der anderen Querschnitte zu erhalten.

3. Vorsteuerungsverfahren nach Anspruch 1, wobei das Erhalten der Sollwindgeschwindigkeit gemäß den Windgeschwindigkeiten aller Querschnitte und den Induktionswirkungseinflusskoeffizienten jeweiliger Querschnitte folgende Schritte umfasst:
Einstellen von den jeweiligen Querschnitten entsprechenden Gewichtungen;
Berechnen von Verhältnissen von Durchschnittswindgeschwindigkeiten der jeweiligen Querschnitte zu den den jeweiligen Querschnitten entsprechenden Induktionswirkungseinflusskoeffizienten; und
Ermitteln einer gewichteten Summe aus den den jeweiligen Querschnitten entsprechenden Verhältnissen und den den jeweiligen Querschnitten entsprechenden Gewichtungen als die Sollwindgeschwindigkeit.

4. Vorsteuerungsverfahren nach Anspruch 1, wobei das Erhalten der Sollwindgeschwindigkeit basierend auf Durchschnittswindgeschwindigkeiten aller Querschnitte folgende Schritte umfasst:
Erhalten einer Zwischenwindgeschwindigkeit durch ein Zusammenfassen von Querschnittsdurchschnittswindgeschwindigkeiten aller Querschnitte,
um Zeitphasendifferenzen unter den Querschnittsdurchschnittswindgeschwindigkeiten aller Querschnitte zu beseitigen; und
Erhalten der Sollwindgeschwindigkeit gemäß der Zwischenwindgeschwindigkeit und einem festgelegten Induktionswirkungseinflusskoeffizienten; und
wobei der festgelegte Induktionswirkungseinflusskoeffizient ermittelt wird durch
ein Einstellen von Gewichtungen für jeweilige Querschnitte;
ein Ermitteln von den jeweiligen Querschnitten entsprechenden Induktionswirkungseinflusskoeffizienten; und
ein Berechnen einer gewichteten Summe aus den den jeweiligen Querschnitten entsprechenden Induktionswirkungseinflusskoeffizienten und den Gewichtungen für die jeweiligen Querschnitte, und Ermitteln der gewichtenten Summe als den festgelegten Induktionswirkungseinflusskoeffizienten.

5. Vorsteuerungsverfahren nach Anspruch 4, wobei das Erhalten einer Zwischenwindgeschwindigkeit durch ein Zusammenfassen von Querschnittsdurchschnittswindgeschwindigkeiten aller Querschnitte folgende Schritte umfasst:
für jeden Querschnitt, Ermitteln einer geschätzten Windgeschwindigkeit,
wenn der Anströmwind den festgelegten Querschnitt von dem Querschnitt aus erreicht, gemäß einer Entfernung von dem Querschnitt zu dem festgelegten Querschnitt und der Querschnittsdurchschnittswindgeschwindigkeit des Querschnitts, und
Ermitteln eines Durchschnittswerts aller geschätzten Windgeschwindigkeiten als die Zwischenwindgeschwindigkeit.

6. Vorsteuerungsverfahren nach Anspruch 5, wobei die geschätzte Windgeschwindigkeit, wenn der Anströmwind den festgelegten Querschnitt von dem Querschnitt aus erreicht, ermittelt wird durch:
ein Berechnen einer Strömzeit, die der Anströmwind benötigt, um von dem Querschnitt zu dem festgelegten Querschnitt zu strömen, gemäß der Entfernung von dem Querschnitt zu dem festgelegten Querschnitt und der Querschnittsdurchschnittswindgeschwindigkeit des Querschnitts; und
ein Ermitteln einer festgelegten Durchschnittswindgeschwindigkeit des festgelegten Querschnitts nach der Strömzeit als die geschätzte Windgeschwindigkeit, wenn der Anströmwind von dem Querschnitt zu dem festgelegten Querschnitt strömt.

7. Vorsteuerungsverfahren nach Anspruch 1, wobei die Fernerkundungsmessvorrichtung ein Lidar umfasst.

8. Vorsteuerungsverfahren nach Anspruch 7, wobei das Zusammenfassen der erhaltenen Anströmwindinformationen zu einer Sollwindgeschwindigkeit folgende Schritte umfasst:
für jeden durch das Lidar emittierten Strahl, Ermitteln einer zusammengefassten Strahl-Windgeschwindigkeit des Strahls gemäß Anströmwindinformationen an einer Vielzahl von räumlichen Punktpositionen auf dem Strahl und der Vielzahl von räumlichen Punktpositionen entsprechenden Induktionswirkungseinflusskoeffizienten; und
Ermitteln eines Durchschnittswerts von zusammengefassten Strahl-Windgeschwindigkeiten aller Strahlen als die Sollwindgeschwindigkeit.

9. Vorsteuerungsverfahren nach Anspruch 8, wobei die zusammengefasste Strahl-Windgeschwindigkeit des Strahls ermittelt wird durch:
ein Einstellen einer Gewichtung für jede räumliche Punktposition;
ein Berechnen eines Verhältnisses von Anströmwindinformationen an jeder räumlichen Punktposition auf dem Strahl zu einem entsprechenden Induktionswirkungseinflusskoeffizienten; und
ein Ermitteln einer gewichteten Summe aus den Verhältnissen und den entsprechenden Gewichtungen, und ein Ermitteln der gewichteten Summe als die zusammengefasste Strahl-Windgeschwindigkeit des Strahls.

10. Vorsteuerungsverfahren nach Anspruch 1, wobei das Vorhersagen eines Eintreffzeitpunkts der ankommenden Strömung basierend auf der zusammengefassten Sollwindgeschwindigkeit, wenn Anströmwind von einem Zielpunkt eine Impeller-Ebene erreicht, folgende Schritte umfasst:
Ermitteln einer Entfernung von einer Position des Zielpunkts zu der Impeller-Ebene; und
Ermitteln eines Verhältnisses der Entfernung zu der zusammengefassten Sollwindgeschwindigkeit als der Eintreffzeitpunkt der ankommenden Strömung.

11. Vorsteuerungsverfahren nach Anspruch 1, wobei das Zusammenfassen der erhaltenen Anströmwindinformationen zu einer Sollwindgeschwindigkeit folgende Schritte umfasst:
Erhalten einer Windgeschwindigkeitskurve des von dem Zielpunkt zu der Impeller-Ebene fließenden Anströmwinds gemäß der erhaltenen Anströmwindinformationen an der Vielzahl von räumlichen Punktpositionen; und
Integrieren der erhaltenen Windgeschwindigkeitskurve, Berechnen eines Verhältnisses einer integralen Fläche zu einer Entfernung zwischen dem Zielpunkt und der Impeller-Ebene, und Bestimmung des Verhältnisses als die Sollwindgeschwindigkeit, und
wobei das Vorhersagen eines Eintreffzeitpunkts der ankommenden Strömung basierend auf der zusammengefassten Sollwindgeschwindigkeit, wenn Anströmwind von einem Zielpunkt eine Impeller-Ebene erreicht, folgenden Schritt umfasst:
Ermitteln eines Verhältnisses der integralen Fläche zu der Sollwindgeschwindigkeit als der Eintreffzeitpunkt der ankommenden Strömung, wenn Anströmwind von dem Zielpunkt die Impeller-Ebene erreicht.

12. Vorsteuerungsverfahren nach Anspruch 1, wobei das Vorhersagen des Eintreffzeitpunkts der ankommenden Strömung basierend auf der zusammengefassten Sollwindgeschwindigkeit, wenn Anströmwind von einem Zielpunkt eine Impeller-Ebene erreicht, folgende Schritte umfasst: Heraussuchen eines der Sollwindgeschwindigkeit entsprechenden Eintreffzeitpunkts der ankommenden Strömung gemäß einer Entsprechungsbeziehung zwischen Sollwindgeschwindigkeiten und Eintreffzeitpunkten der ankommenden Strömung; und
Ermitteln des herausgesuchten Eintreffzeitpunkts der ankommenden Strömung als der Eintreffzeitpunkt der ankommenden Strömung, wenn der Anströmwind von dem Zielpunkt die Impeller-Ebene erreicht.

13. Vorsteuerungsverfahren nach Anspruch 1, wobei das Vorhersagen des Eintreffzeitpunkts der ankommenden Strömung basierend auf der zusammengefassten Sollwindgeschwindigkeit, wenn Anströmwind von einem Zielpunkt eine Impeller-Ebene erreicht, folgende Schritte umfasst:
Ermitteln einer ersten Strömzeit, die der Anströmwind benötigt, um von einem vorbestimmten Querschnitt zu einem festgelegten Querschnitt zu strömen;
Ermitteln einer zweiten Strömzeit, die der Anströmwind benötigt, um von dem festgelegten Querschnitt zu der Impeller-Ebene zu strömen;
Erhalten des Eintreffzeitpunkts der ankommenden Strömung, wenn der Anströmwind von dem Zielpunkt die Impeller-Ebene erreicht, gemäß der ermittelten ersten Strömzeit und der ermittelten zweiten Strömzeit.

14. Vorsteuerungsverfahren nach Anspruch 13, wobei das Vorhersagen eines Eintreffzeitpunkts der ankommenden Strömung basierend auf der zusammengefassten Sollwindgeschwindigkeit, wenn Anströmwind von einem Zielpunkt eine Impeller-Ebene erreicht, folgende Schritte umfasst:
Ermitteln einer dritten Strömzeit, die der Anströmwind benötigt, um von dem Zielpunkt zu der am weitesten entfernten Erfassungsdistanz zu strömen, wenn eine Lage des Zielpunkts die am weitesten entfernte Erfassungsdistanz der Fernerkundungsmessvorrichtung überschreitet; und
Erhalten des Eintreffzeitpunkts der ankommenden Strömung basierend auf der ersten Strömzeit, der zweiten Strömzeit und der dritten Strömzeit, wenn der Anströmwind von dem Zielpunkt die Impeller-Ebene erreicht.

15. Vorsteuerungsverfahren nach Anspruch 1, wobei das Durchführen einer Vorsteuerung an der Windkraftanlage gemäß dem vorhergesagten Eintreffzeitpunkt der ankommenden Strömung folgende Schritte umfasst:
Ermitteln (S31) einer Steuerungsreaktionszeit für die eine Vorsteuerung durchführende Windkraftanlage;
Ermitteln (S32) einer Wartezeit für die die Vorsteuerung durchführende Windkraftanlage gemäß dem vorhergesagten Eintreffzeitpunkt der ankommenden Strömung und der Steuerungsreaktionszeit; und
Durchführen (S33) der Vorsteuerung an der Windkraftanlage, wenn die ermittelte Wartezeit erreicht ist.

16. Vorsteuerungsverfahren nach Anspruch 15, wobei die Wartezeit für die die Vorsteuerung durchführende Windkraftanlage eine Differenz zwischen dem vorhergesagten Eintreffzeitpunkt der ankommenden Strömung und der Steuerungsreaktionszeit ist.

17. Vorsteuerungsverfahren nach Anspruch 15, wobei das Durchführen der Vorsteuerung an der Windkraftanlage, wenn die ermittelte Wartezeit erreicht ist, folgende Schritte umfasst:
Ermitteln (S331) einer Sollwindgeschwindigkeit zu einem aktuellen Zeitpunkt, wenn die Wartezeit erreicht ist;
Ermitteln (S332) einer der Sollwindgeschwindigkeit zu dem aktuellen Zeitpunkt entsprechenden Steuerungsstrategie; und
Steuern (S333) der Windkraftanlage derart, dass die ermittelte Steuerungsstrategie ausgeführt wird.

18. Vorsteuerungsverfahren nach Anspruch 17, wobei das Ermitteln einer der Sollwindgeschwindigkeit zu dem aktuellen Zeitpunkt entsprechenden Steuerungsstrategie folgenden Schritt umfasst:
Heraussuchen der der Sollwindgeschwindigkeit zu dem aktuellen Zeitpunkt entsprechenden Steuerungsstrategie aus einer Steuerungsstrategietabelle, wobei Windgeschwindigkeiten und den Windgeschwindigkeiten entsprechende Steuerungsstrategien in die Steuerungsstrategietabelle eingespeicherte werden.

19. Vorsteuerungsverfahren nach Anspruch 17, des Weiteren folgenden Schritt umfassend:
Ermitteln zumindest eines Sollwindscherungsfaktors, einer Sollwindrichtung oder einer Sollturbulenzintensität basierend auf den erhaltenen Anströmwindinformationen an der Vielzahl von räumlichen Punktpositionen,
wobei das Durchführen der Vorsteuerung an der Windkraftanlage, wenn die ermittelte Wartezeit erreicht ist, des Weiteren folgenden Schritt umfasst: Ermitteln zumindest des Sollwindscherungsfaktors, der Sollwindrichtung oder der Sollturbulenzintensität zu dem aktuellen Zeitpunkt, und
wobei die ermittelte Steuerungsstrategie eine der Sollwindgeschwindigkeit und dem Sollwindscherungsfaktor und/oder der Sollwindrichtung und/oder der Sollturbulenzintensität zu dem aktuellen Zeitpunkt entsprechende Steuerungsstrategie ist.

20. Vorsteuerungsverfahren nach Anspruch 19, wobei die erhaltenen Anströmwindinformationen erste Anströmwindinformationen und zweite Anströmwindinformationen umfassen;
wobei die ersten Anströmwindinformationen Anströmwindinformationen an jeder räumlichen Punktposition oberhalb einer Ebene, wo sich eine Mittellinie von durch die Fernerkundungsmessvorrichtung emittierten Strahlen befindet, umfassen, und wobei die zweiten Anströmwindinformationen Anströmwindinformationen an jeder räumlichen Punktposition unterhalb der Ebene, wo sich die Mittellinie der durch die Fernerkundungsmessvorrichtung emittierten Strahlen befindet, umfassen; wobei das Ermitteln des Sollwindscherungsfaktors folgende Schritte umfasst:
Zusammenfassen (S701) der ersten Anströmwindinformationen, um eine erste zusammengefasste Windgeschwindigkeit zu erhalten;
Zusammenfassen (S702) der zweiten Anströmwindinformationen, um eine zweite zusammengefasste Windgeschwindigkeit zu erhalten;
Berechnen eines Durchschnittswerts von Höhen einer Vielzahl von räumlichen Punktpositionen oberhalb der Ebene, wo sich die Mittellinie der durch die Fernerkundungsmessvorrichtung emittierten Strahlen befindet, um eine erste Höhe zu erhalten (S703);
Berechnen eines Durchschnittswerts von Höhen einer Vielzahl von räumlichen Punktpositionen unterhalb der Ebene, wo sich die Mittellinie der durch die Fernerkundungsmessvorrichtung emittierten Strahlen befindet, um eine zweite Höhe zu erhalten (S704); und
Berechnen (S705) des Sollwindscherungsfaktors gemäß der ersten zusammengefassten Windgeschwindigkeit, der zweiten zusammengefassten Windgeschwindigkeit, der ersten Höhe und der zweiten Höhe.

21. Vorsteuerungsverfahren nach Anspruch 20, wobei das Ermitteln der Sollwindrichtung folgende Schritte umfasst:
Berechnen (S801) einer horizontalen Windrichtung des Anströmwinds gemäß den ersten Anströmwindinformationen, den zweiten Anströmwindinformationen und einem Zenitwinkel jedes durch die Fernerkundungsmessvorrichtung emittierten Strahls;
Berechnen (S802) einer vertikalen Windrichtung des Anströmwinds gemäß den ersten Anströmwindinformationen, den zweiten Anströmwindinformationen, dem Zenitwinkel jedes durch die Fernerkundungsmessvorrichtung emittierten Strahls und einem Azimutwinkel jedes durch die Fernerkundungsmessvorrichtung emittierten Strahls relativ zu der Ebene, wo sich die Mittellinie der Strahlen befindet; und
Ermitteln (S803) eines Winkels zwischen der horizontalen Windrichtung und der vertikalen Windrichtung des Anströmwinds als die Sollwindrichtung.

22. Vorsteuerungsverfahren nach Anspruch 19, wobei das Ermitteln der Sollturbulenzintensität folgende Schritte umfasst:
Zusammenfassen der erhaltenen Anströmwindinformationen an der Vielzahl von räumlichen Punktpositionen zu der Sollwindgeschwindigkeit;
Berechnen einer Windgeschwindigkeitsstandardabweichung der Sollwindgeschwindigkeit innerhalb einer vorbestimmten Zeitdauer und einer Durchschnittswindgeschwindigkeit der Sollwindgeschwindigkeit innerhalb der vorbestimmten Zeitdauer; und
Ermitteln eines Verhältnisses der Windgeschwindigkeitsstandardabweichung zu der Durchschnittswindgeschwindigkeit als die Sollturbulenzintensität.

23. Vorsteuerungsvorrichtung für eine Windkraftanlage, Folgendes umfassend:
ein Anströmwindinformationenerfassungsmodul (10), das dazu konfiguriert ist, Anströmwindinformationen an einer Vielzahl von räumlichen Punktpositionen vor der Windkraftanlage durch eine Fernerkundungsmessvorrichtung zu erhalten, wobei die Vielzahl von räumlichen Punktpositionen in einer Vielzahl von verschiedenen Querschnitten verteilt ist und wobei die Vielzahl von verschiedenen Querschnitten verschiedene Entfernungen zu der Windkraftanlage aufweist;
ein Windgeschwindigkeitszusammenfassmodul (20), das dazu konfiguriert ist, die erhaltenen Anströmwindinformationen zu einer Sollwindgeschwindigkeit zusammenzufassen;
ein Zeitvorhersagemodul (30), das dazu konfiguriert ist, einen Eintreffzeitpunkt der ankommenden Strömung basierend auf der zusammengefassten Sollwindgeschwindigkeit, wenn Anströmwind von einem Zielpunkt eine Impeller-Ebene erreicht, vorherzusagen; und
ein Vorsteuerungsmodul (40), das dazu konfiguriert ist, eine Vorsteuerung an der Windkraftanlage gemäß dem vorhergesagten Eintreffzeitpunkt der ankommenden Strömung durchzuführen,
**dadurch gekennzeichnet, dass**
das Windgeschwindigkeitszusammenfassmodul (20) des Weiteren dazu konfiguriert ist: eine Durchschnittswindgeschwindigkeit jedes Querschnitts des Anströmwinds gemäß den Anströmwindinformationen an der Vielzahl von räumlichen Punktpositionen jedes Querschnitts zu ermitteln; jeweiligen Querschnitten entsprechenden Induktionswirkungseinflusskoeffizienten zu ermitteln; und die Sollwindgeschwindigkeit basierend auf Durchschnittswindgeschwindigkeiten aller Querschnitte und auf Induktionswirkungseinflusskoeffizienten jeweiliger Querschnitte zu erhalten.

24. Steuerung einer Windkraftanlage, Folgendes umfassend:
einen Prozessor (100);
eine Ein-/Ausgabeschnittstelle (300);
einen Speicher (200), der dazu konfiguriert ist, ein Computerprogramm zu speichern; und
wobei der Prozessor (100) dazu konfiguriert ist, das Computerprogramm auszuführen, um das Vorsteuerungsverfahren für die Windkraftanlage nach einem der Ansprüche 1 bis 22 durchzuführen.

25. Steuersystem einer Windkraftanlage, Folgendes umfassend:
eine Fernerkundungsmessvorrichtung, die dazu konfiguriert ist, Anströmwindinformationen an einer Vielzahl von räumlichen Punktpositionen vor der Windkraftanlage zu erfassen, wobei die Vielzahl von räumlichen Punktpositionen in einer Vielzahl von verschiedenen Querschnitten verteilt ist und wobei die Vielzahl von verschiedenen Querschnitten verschiedene Entfernungen zu der Windkraftanlage aufweist; und
eine Steuerung, die dazu konfiguriert ist, die Anströmwindinformationen an der Vielzahl von räumlichen Punktpositionen von der Fernerkundungsmessvorrichtung zu erhalten, um das Vorsteuerungsverfahren für die Windkraftanlage nach einem der Ansprüche 1 bis 22 durchzuführen.

26. Computerlesbares Speichermedium, das mit einem Computerprogramm gespeichert ist, wobei das Computerprogramm, wenn es von einem Prozessor (100) ausgeführt wird, das Vorsteuerungsverfahren für die Windkraftanlage nach einem der Ansprüche 1 bis 22 durchführt.

## Revendications

1. Procédé de commande prédictive pour une éolienne, comprenant les étapes suivantes :
obtenir (S10) des informations du vent entrant à une pluralité de positions de point spatiales devant l'éolienne par un dispositif de mesure de détection à distance, dans lequel la pluralité de positions de point spatiales est distribuée dans une pluralité de sections transversales différentes et dans lequel la pluralité de sections transversales différentes a des distances différentes de l'éolienne ;
synthétiser (S20) les informations du vent entrant obtenues en une vitesse de vent de consigne ;
prédire (S30) un temps d'arrivée de l'écoulement arrivant sur la base de la vitesse de vent de consigne synthétisée lorsque du vent entrant d'un point cible atteint un plan du rotor ; et
effectuer une commande prédictive sur l'éolienne selon le temps d'arrivée prédit de l'écoulement arrivant,
dans lequel l'étape consistant à synthétiser (S20) les informations du vent entrant obtenues en une vitesse de vent de consigne comprend les étapes suivantes :
déterminer une vitesse de vent moyenne de chaque section transversale du vent entrant selon les informations du vent entrant à la pluralité de positions de point spatiales de chaque section transversale ;
déterminer des coefficients d'influence de l'effet inductif qui correspondent à des sections transversales respectives ; et
obtenir la vitesse de vent de consigne sur la base de vitesses de vent moyennes de toutes les sections transversales et de coefficients d'influence de l'effet inductif.

2. Procédé de commande prédictive selon la revendication 1, dans lequel l'étape consistant à déterminer les coefficients d'influence de l'effet inductif qui correspondent à des sections transversales respectives comprend les étapes suivantes :
sélectionner une section transversale de toutes les sections transversales comme une section transversale de référence ;
régler un coefficient d'influence de l'effet inductif de la section transversale de référence ; et
ajuster le coefficient d'influence de l'effet inductif de la section transversale de référence en fonction de distances entre des autres sections transversales, sauf la section transversale de référence,
dans toutes les sections transversales et la section transversale de référence pour obtenir des coefficients d'influence de l'effet inductif des autres sections transversales.

3. Procédé de commande prédictive selon la revendication 1, dans lequel l'étape consistant à obtenir la vitesse de vent de consigne selon les vitesses de vent de toutes les sections transversales et des coefficients d'influence de l'effet inductif des sections transversales respectives comprend les étapes suivantes :
régler des pondérations qui correspondent aux sections transversales respectives ;
calculer des rapports de vitesses de vent moyennes des sections transversales respectives par rapport aux coefficients d'influence de l'effet inductif des sections transversales respectives ; et
déterminer une somme pondérée des rapports qui correspondent aux sections transversales respectives et des pondérations qui correspondent aux sections transversales respectives comme vitesse de vent de consigne.

4. Procédé de commande prédictive selon la revendication 1, dans lequel l'étape consistant à obtenir la vitesse de vent de consigne sur la base de vitesses de vent moyennes de toutes les sections transversales comprend les étapes suivantes :
obtenir une vitesse de vent intermédiaire en synthétisant des vitesses de vent moyennes de sections transversales de toutes les sections transversales pour éliminer des différences de phases temporelles parmi les vitesses de vent moyennes de sections transversales de toutes les sections transversales ; et
obtenir la vitesse de vent de consigne selon la vitesse de vent intermédiaire et un coefficient d'influence donné de l'effet inductif ; et
dans lequel le coefficient d'influence donné de l'effet inductif est déterminé par
un réglage de pondérations pour des sections transversales respectives ;
une détermination de coefficients d'influence de l'effet inductif qui correspondent aux sections transversales respectives ; et
un calcul d'une somme pondérée des coefficients d'influence de l'effet inductif qui correspondent aux sections transversales respectives et des pondérations pour les sections transversales respectives, et une détermination de la somme pondérée comme coefficient d'influence donné de l'effet inductif.

5. Procédé de commande prédictive selon la revendication 4, dans lequel l'étape consistant à obtenir une vitesse de vent intermédiaire en synthétisant des vitesses de vent moyennes de sections transversales de toutes les sections transversales comprend les étapes suivantes :
pour chaque section transversale, lorsque le vent entrant atteint la section transversale désignée à partir de la section transversale,
déterminer une vitesse de vent estimée selon une distance de la section transversale à la section transversale désignée et la vitesse de vent moyenne de sections transversales de la section transversale, et
déterminer une valeur moyenne de toutes les vitesses de vent estimées comme la vitesse de vent intermédiaire.

6. Procédé de commande prédictive selon la revendication 5, dans lequel, lorsque le vent entrant atteint la section transversale désignée à partir de la section transversale, la vitesse de vent estimée est déterminée par :
un calcul d'un temps d'écoulement requis pour que le vent entrant s'écoule de la section transversale à la section transversale désignée selon la distance de la section transversale à la section transversale désignée et la vitesse de vent moyenne de sections transversales de la section transversale ; et
une détermination d'une vitesse de vent moyenne désignée de la section transversale désignée après le temps d'écoulement comme vitesse de vent estimée lorsque le vent entrant s'écoule de la section transversale à la section transversale désignée.

7. Procédé de commande prédictive selon la revendication 1, dans lequel le dispositif de mesure de détection à distance comprend un lidar.

8. Procédé de commande prédictive selon la revendication 7, dans lequel l'étape consistant à synthétiser les informations du vent entrant obtenues en une vitesse de vent de consigne comprend les étapes suivantes :
pour chaque faisceau émis par le lidar, déterminer une vitesse de vent de faisceau synthétisée du faisceau selon des informations du vent entrant à une pluralité de positions de point spatiales sur le faisceau et des coefficients d'influence de l'effet inductif qui correspondent à la pluralité de positions de point spatiales ; et
déterminer une valeur moyenne de vitesses de vent de faisceau synthétisées de tous les faisceaux comme vitesse de vent de consigne.

9. Procédé de commande prédictive selon la revendication 8, dans lequel la vitesse de vent de faisceau synthétisée du faisceau est déterminée par :
un réglage d'une pondération pour chaque position de point spatiale ;
un calcul d'un rapport d'informations du vent entrant à chaque position de point spatiale sur le faisceau par rapport à un coefficient d'influence de l'effet inductif correspondant ; et
une détermination d'une somme pondérée des rapports et des pondérations correspondantes, et une détermination de la somme pondérée comme vitesse de vent de faisceau synthétisée du faisceau.

10. Procédé de commande prédictive selon la revendication 1, dans
lequel l'étape consistant à prédire un temps d'arrivée de l'écoulement arrivant sur la base de la vitesse de vent de consigne synthétisée lorsque du vent entrant d'un point cible atteint un plan du rotor comprend les étapes suivantes :
déterminer une distance d'une position du point cible au plan du rotor ; et
déterminer un rapport de la distance à la vitesse de vent de consigne synthétisée comme temps d'arrivée de l'écoulement arrivant.

11. Procédé de commande prédictive selon la revendication 1, dans lequel l'étape consistant à synthétiser les informations du vent entrant obtenues en une vitesse de vent de consigne comprend les étapes suivantes :
obtenir une courbe de la vitesse de vent du vent entrant, qui s'écoule du point cible au plan du rotor, selon les informations du vent entrant obtenues à la pluralité de positions de point spatiales ; et
intégrer la courbe obtenue de la vitesse de vent, calculer un rapport d'une aire intégrale par rapport à une distance entre le point cible et le plan du rotor, et déterminer le rapport comme vitesse de vent de consigne, et
dans lequel l'étape consistant à prédire un temps d'arrivée de l'écoulement arrivant sur la base de la vitesse de vent de consigne synthétisée lorsque du vent entrant d'un point cible atteint un plan du rotor comprend l'étape suivante :
déterminer un rapport de l'aire intégrale par rapport à la vitesse de vent de consigne comme temps d'arrivée de l'écoulement arrivant lorsque du vent entrant du point cible atteint le plan du rotor.

12. Procédé de commande prédictive selon la revendication 1, dans lequel l'étape consistant à prédire un temps d'arrivée de l'écoulement arrivant sur la base de la vitesse de vent de consigne synthétisée lorsque du vent entrant d'un point cible atteint un plan du rotor comprend les étapes suivantes :
rechercher un temps d'arrivée de l'écoulement arrivant qui correspond à la vitesse de vent de consigne selon une relation de correspondance entre des vitesses de vent de consigne et des temps d'arrivée de l'écoulement arrivant ; et
déterminer le temps d'arrivée recherché de l'écoulement arrivant comme temps d'arrivée de l'écoulement arrivant lorsque le vent entrant du point cible atteint le plan du rotor.

13. Procédé de commande prédictive selon la revendication 1, dans lequel l'étape consistant à prédire un temps d'arrivée de l'écoulement arrivant sur la base de la vitesse de vent de consigne synthétisée lorsque du vent entrant d'un point cible atteint un plan du rotor comprend les étapes suivantes :
déterminer un premier temps d'écoulement requis pour que le vent entrant s'écoule d'une section transversale prédéterminée à une section transversale désignée ;
déterminer un deuxième temps d'écoulement requis pour que le vent entrant s'écoule de la section transversale désignée au plan du rotor ;
lorsque le vent entrant du point cible atteint le plan du rotor, obtenir le temps d'arrivée de l'écoulement arrivant selon le premier temps d'écoulement déterminé et le deuxième temps d'écoulement déterminé.

14. Procédé de commande prédictive selon la revendication 13, dans
lequel l'étape consistant à prédire un temps d'arrivée de l'écoulement arrivant sur la base de la vitesse de vent de consigne synthétisée lorsque du vent entrant d'un point cible atteint un plan du rotor comprend les étapes suivantes :
déterminer un troisième temps d'écoulement requis pour que le vent entrant s'écoule du point cible à la distance de détection la plus éloignée lorsqu'une position du point cible dépasse la distance de détection la plus éloignée du dispositif de mesure de détection à distance ; et
obtenir le temps d'arrivée de l'écoulement arrivant sur la base du premier temps d'écoulement, du deuxième temps d'écoulement et du troisième temps d'écoulement lorsque le vent entrant du point cible atteint le plan du rotor.

15. Procédé de commande prédictive selon la revendication 1, dans lequel l'étape consistant à effectuer une commande prédictive sur l'éolienne selon le temps d'arrivée prédit de l'écoulement arrivant comprend les étapes suivantes :
déterminer (S31) un temps de réponse de commande pour l'éolienne qui effectue une commande prédictive ;
déterminer (S32) un temps d'attente pour l'éolienne qui effectue la commande prédictive selon le temps d'arrivée prédit de l'écoulement arrivant et le temps de réponse de commande ; et
effectuer (S33) la commande prédictive sur l'éolienne lorsque le temps d'attente déterminé est atteint.

16. Procédé de commande prédictive selon la revendication 15, dans lequel le temps d'attente pour l'éolienne qui effectue la commande prédictive est une différence entre le temps d'arrivée prédit de l'écoulement arrivant et le temps de réponse de commande.

17. Procédé de commande prédictive selon la revendication 15, dans lequel l'étape consistant à effectuer la commande prédictive sur l'éolienne lorsque le temps d'attente est atteint comprend les étapes suivantes :
déterminer (S331) une vitesse de vent de consigne à un moment actuel lorsque le temps d'attente est atteint ;
déterminer (S332) une stratégie de commande qui correspond à la vitesse de vent de consigne au moment actuel ; et
commander (S333) l'éolienne de manière que la stratégie de commande déterminée est exécutée.

18. Procédé de commande prédictive selon la revendication 17, dans lequel l'étape consistant à déterminer une stratégie de commande qui correspond à la vitesse de vent de consigne au moment actuel comprend l'étape suivante :
rechercher la stratégie de commande qui correspond à la vitesse de vent de consigne au moment actuel d'un tableau de stratégies de commande, dans lequel les vitesses de vent et les stratégies de commande qui correspondent aux vitesses de vent sont stockées dans le tableau de stratégies de commande.

19. Procédé de commande prédictive selon la revendication 17,
comprenant en outre l'étape suivante :
déterminer au moins un facteur de consigne du cisaillement du vent, une direction de consigne du vent ou une intensité de turbulence de consigne sur la base des informations du vent entrant obtenues à la pluralité de positions de point spatiales,
dans lequel l'étape consistant à effectuer la commande prédictive sur l'éolienne lorsque le temps d'attente déterminé est atteint comprend en outre l'étape suivante : déterminer au moins le facteur de consigne du cisaillement du vent, la direction de consigne du vent ou l'intensité de turbulence de consigne au moment actuel, et
dans lequel la stratégie de commande déterminée est une stratégie de commande qui correspond à la vitesse de vent de consigne et au facteur de consigne du cisaillement du vent et/ou à la direction de consigne du vent et/ou à l'intensité de turbulence de consigne au moment actuel.

20. Procédé de commande prédictive selon la revendication 19, dans
lequel les informations du vent entrant obtenues comprennent des premières informations du vent entrant et des deuxièmes informations du vent entrant ;
dans lequel les premières informations du vent entrant comprennent des informations du vent entrant à chaque position de point spatiale au-dessus d'un plan où se trouve une ligne centrale de faisceaux émis par le dispositif de mesure de détection à distance, et dans lequel les deuxièmes informations du vent entrant comprennent des informations du vent entrant à chaque position de point spatiale au-dessous du plan où se trouve la ligne centrale des faisceaux émis par le dispositif de mesure de détection à distance ;
dans lequel l'étape consistant à déterminer le facteur de consigne du cisaillement du vent comprend les étapes suivantes :
synthétiser (S701) les premières informations du vent entrant pour obtenir une première vitesse de vent synthétisée ;
synthétiser (S702) les deuxièmes informations du vent entrant pour obtenir une deuxième vitesse de vent synthétisée ;
calculer une valeur moyenne de hauteurs d'une pluralité de positions de point spatiales au-dessus du plan où se trouve la ligne centrale des faisceaux émis par le dispositif de mesure de détection à distance pour obtenir (S703) une première hauteur ;
calculer une valeur moyenne de hauteurs d'une pluralité de positions de point spatiales au-dessous du plan où se trouve la ligne centrale des faisceaux émis par le dispositif de mesure de détection à distance pour obtenir (S704) une deuxième hauteur ;
calculer (S705) le facteur de consigne du cisaillement du vent selon la première vitesse de vent synthétisée, la deuxième vitesse de vent synthétisée, la première hauteur et la deuxième hauteur.

21. Procédé de commande prédictive selon la revendication 20, dans lequel l'étape consistant à déterminer la direction de consigne du vent comprend les étapes suivantes :
calculer (S801) une direction de vent horizontale du vent entrant selon les premières informations du vent entrant, les deuxièmes informations du vent entrant et un angle zénithal de chaque faisceau émis par le dispositif de mesure de détection à distance ;
calculer (S802) une direction de vent verticale du vent entrant selon les premières informations du vent entrant, les deuxièmes informations du vent entrant, l'angle zénithal de chaque faisceau émis par le dispositif de mesure de détection à distance et un angle d'azimut de chaque faisceau émis par le dispositif de mesure de détection à distance par rapport au plan où se trouve la ligne centrale des faisceaux ; et
déterminer (S803) un angle entre la direction de vent horizontale et la direction de vent verticale du vent entrant comme direction de vent de consigne.

22. Procédé de commande prédictive selon la revendication 19, dans
lequel l'étape consistant à déterminer l'intensité de turbulence de consigne comprend les étapes suivantes :
synthétiser les informations du vent entrant obtenues à la pluralité de positions de point spatiales en la vitesse de vent de consigne ;
calculer un écart-type de vitesse de vent de la vitesse de vent de consigne dans une période de temps prédéterminée et une vitesse de vent moyenne de la vitesse de vent de consigne dans la période de temps prédéterminée ; et
déterminer un rapport de l'écart-type de vitesse de vent par rapport à la vitesse de vent moyenne comme intensité de turbulence de consigne.

23. Dispositif de commande prédictive pour une éolienne, comprenant :
un module (10) d'acquisition d'informations du vent entrant configuré pour obtenir des informations du vent entrant à une pluralité de positions de point spatiales devant l'éolienne par un dispositif de mesure de détection à distance, dans lequel la pluralité de positions de point spatiales est distribuée dans une pluralité de sections transversales différentes et dans lequel la pluralité de sections transversales différentes a des distances différentes de l'éolienne ;
un module (20) de synthèse de vitesses du vent configuré pour synthétiser les informations du vent entrant obtenues en une vitesse de vent de consigne ;
un module (30) de prédiction de temps configuré pour prédire un temps d'arrivée de l'écoulement arrivant sur la base de la vitesse de vent de consigne synthétisée lorsque du vent entrant d'un point cible atteint un plan du rotor ; et
le module (40) de commande prédictive configuré pour effectuer une commande prédictive sur l'éolienne selon le temps d'arrivée prédit de l'écoulement arrivant,
**caractérisé en ce que**
le module (20) de synthèse de vitesses du vent est en outre configuré pour : déterminer une vitesse de vent moyenne de chaque section transversale du vent entrant selon les informations du vent entrant à la pluralité de positions de point spatiales de chaque section transversale ; déterminer des coefficients d'influence de l'effet inductif qui correspondent à des sections transversales respectives ; et obtenir la vitesse de vent de consigne sur la base de vitesses de vent moyennes de toutes les sections transversales et de coefficients d'influence de l'effet inductif de sections transversales respectives.

24. Contrôleur d'une éolienne, comprenant :
un processeur (100) ;
une interface (300) d'entrée/sortie ;
une mémoire (200) configurée pour stocker un programme d'ordinateur ; et
dans lequel le processeur (100) est configuré pour exécuter le programme d'ordinateur afin de mettre en œuvre le procédé de commande prédictive pour l'éolienne selon l'une quelconque des revendications 1 à 22.

25. Système de contrôle d'une éolienne, comprenant :
un dispositif de mesure de détection à distance configuré pour détecter des informations du vent entrant à une pluralité de positions de point spatiales devant l'éolienne, dans lequel la pluralité de positions de point spatiales est distribuée dans une pluralité de sections transversales différentes et dans lequel la pluralité de sections transversales différentes a des distances différentes de l'éolienne ; et
un contrôleur configuré pour obtenir les informations du vent entrant à la pluralité de positions de point spatiales par le dispositif de mesure de détection à distance pour mettre en œuvre le procédé de commande prédictive pour l'éolienne selon l'une quelconque des revendications 1 à 22.

26. Support de stockage lisible par ordinateur stocké avec un programme d'ordinateur, dans lequel le programme d'ordinateur, lorsqu'il est exécuté par un processeur (100), met en œuvre le procédé de commande prédictive pour l'éolienne selon l'une quelconque des revendications 1 à 22.
